(19) Europäisches Patentamt / European Patent Office / Office européen des brevets

(11) **EP 4 718 769 A1**

(12) **DEMANDE DE BREVET EUROPEEN**

(43) Date de publication:
01.04.2026 Bulletin 2026/14

(21) Numéro de dépôt: 25183565.8

(22) Date de dépôt: 18.06.2025

(51) Classification Internationale des Brevets (IPC):
*H04L 9/08* (2006.01)    *G06F 7/58* (2006.01)
*H04L 9/30* (2006.01)

(52) Classification Coopérative des Brevets (CPC):
**H04L 9/0869; H04L 9/3093**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: 30.09.2024 FR 2410450

(71) Demandeur: IDEMIA France
**92400 Courbevoie (FR)**

(72) Inventeurs:
• EID, Elie
**92400 Courbevoie (FR)**
• GREUET, Aurélien
**92400 Courbevoie (FR)**
• REBOUD, Nathan
**92400 Courbevoie (FR)**

(74) Mandataire: **Idemia**
**Service IP / IST**
**2, place Samuel de Champlain**
**92400 Courbevoie (FR)**

(54) **PROCÉDÉ D´ÉCHANTILLONNAGE DISCRET SÉCURISÉ À PARTIR D´UNE DONNÉE D´ENTRÉE, DISPOSITIF ÉLECTRONIQUE ET PROGRAMME D´ORDINATEUR ASSOCIÉS**

(57) Procédé d'échantillonnage sécurisé à partir d'une entrée et d'un tableau de seuils ordonnés, comprenant :

a) la recherche (E4) d'un intervalle comprenant l'entrée en parcourant un arbre binaire parfait comprenant un nœud racine, des nœuds internes et des feuilles,
- chaque nœud ayant une clé égale à un autre seuil d'un autre tableau, les autres seuils définissant un multiensemble incluant un autre multiensemble défini par les seuils,
- chaque feuille étant un intervalle semi-ouvert défini par une paire distincte d'autres seuils successifs de l'autre tableau,
- chaque nœud interne d'une même profondeur, respectivement chaque feuilles, ayant un incrément parmi deux mêmes valeurs différentes pour la profondeur concernée, des nœuds internes, respectivement des feuilles, rattachés à un même autre nœud ayant des incréments de valeur différente, et

b) la détermination (E6) d'un résultat d'échantillonnage par accumulation des incréments des nœuds internes et de la feuille de l'arbre parcourus pendant la recherche.

Figure 2

## Description

L'invention concerne le domaine de la cryptographie informatique. Elle concerne plus particulièrement un procédé d'échantillonnage discret sécurisé à partir d'une donnée d'entrée et d'un tableau de seuils de décision. L'invention concerne également un dispositif électronique et un programme d'ordinateur associés.

De façon connue, un algorithme cryptographique peut être utilisé pour chiffrer, déchiffrer, signer ou vérifier la signature d'une donnée. Un tel algorithme cryptographique est par exemple un algorithme cryptographique à clés asymétriques mis en œuvre par un dispositif électronique, typiquement un algorithme RSA ou un algorithme à courbe elliptique mis en œuvre par la puce d'une carte à puce.

L'émergence de calculateurs quantiques rend ces algorithmes cryptographiques non sûrs.

Des algorithmes cryptographiques adaptés pour garantir la sécurité face à un attaquant disposant d'un calculateur quantique peuvent être utilisés. Ces algorithmes cryptographiques sont dénommés algorithmes cryptographiques post-quantiques.

Dans les algorithmes cryptographiques, notamment dans les algorithmes cryptographiques post-quantiques, de nombreuses procédures nécessitent d'échantillonner une ou plusieurs données à partir d'au moins un tableau de seuils décision.

Lorsqu'un échantillonnage discret traite des données secrètes, un masquage peut être utilisé pour sécuriser les implémentations contre les attaques par canaux auxiliaires.

Plusieurs procédés d'échantillonnage discret à partir d'une donnée d'entrée et d'un tableau de seuils de décision existent.

Le document « François Gérard and Mélissa Rossi. An Efficient and Provable Masked Implementation of qTESLA. Cryptology ePrint Archive, Paper 2019/606, 2019 » décrit, notamment avec l'algorithme 9, un procédé d'échantillonnage discret à partir d'une donnée d'entrée masquée et d'un tableau de seuils de décision pour sa mise en œuvre dans un algorithme cryptographique post-quantique qTESLA.

Cependant, ces procédés sollicitent beaucoup le dispositif électronique.

Pour remédier à ces inconvénients, la présente invention propose selon un premier aspect, un procédé d'échantillonnage discret sécurisé à partir d'une donnée d'entrée et d'un premier tableau de premiers seuils de décision ordonnés, le procédé étant mis en œuvre par un dispositif électronique, et le procédé étant caractérisé en ce qu'il comprend les étapes suivantes:

a) Recherche d'un intervalle auxiliaire de décision comprenant la donnée d'entrée, en parcourant un arbre binaire parfait de recherche depuis un nœud racine jusqu'à une feuille, l'arbre comprenant le nœud racine, une pluralité de nœuds internes et une pluralité de feuilles,

- chaque nœud ayant une clé égale à un deuxième seuil de décision distinct d'un deuxième tableau de deuxièmes seuils de décision ordonnés, les deuxièmes seuils de décision du deuxième tableau définissant un premier multiensemble d'éléments de décision incluant un deuxième multiensemble d'éléments de décision défini par les premiers seuils de décision du premier tableau,
- chaque feuille étant un intervalle auxiliaire de décision semi-ouvert défini par une paire distincte de deuxièmes seuils de décision successifs du deuxième tableau,
- chaque nœud interne d'une même profondeur ayant un incrément parmi un même ensemble de deux valeurs différentes associé à la profondeur concernée, des nœuds internes rattachés à un même autre nœud ayant des incréments de valeur différente, et
- chaque feuille de l'arbre ayant un incrément parmi un même autre ensemble de deux valeurs différentes tel que des feuilles rattachées à un même nœud ont des incréments de valeur différente, et

b) détermination d'un résultat d'échantillonnage par accumulation des incréments des nœuds internes et de la feuille de l'arbre parcourus pendant la recherche.

La donnée d'entrée peut être une donnée d'entrée masquée ou une donnée d'entrée non masquée, c'est-à-dire en clair.

D'autres caractéristiques avantageuses et non limitatives du procédé conforme à l'invention, prises individuellement ou selon toutes les combinaisons techniquement possibles, sont les suivantes :

- l'arbre a un nœud distinct pour chaque deuxième seuil décision ;
- chaque paire distincte de deuxièmes seuils de décision successifs du deuxième tableau définit l'intervalle auxiliaire de décision d'une feuille de l'arbre binaire parfait ;
- le premier tableau a un premier nombre de premiers seuils de décision différent d'une puissance de 2 ;

- le deuxième tableau a un deuxième nombre de deuxièmes seuils de décision strictement supérieur au premier nombre ;
- la donnée d'entrée appartient à un ensemble fini d'éléments d'entrée ;
- le deuxième multiensemble ne se distingue du premier multiensemble que par au moins une multiplicité d'un élément de décision, chaque élément de décision de ladite au moins une multiplicité, ayant une valeur supérieure ou égale, ou strictement inférieure, à tous les éléments d'entrée dudit ensemble fini ;
- pour chaque nœud parcouru, un résultat booléen est déterminé par comparaison de la donnée d'entrée avec la clé du nœud parcouru concerné ;
- l'accumulation des incréments est par des opérations bit à bit à partir desdits résultats booléen ;
- pour chaque nœud interne parcouru, la clé du nœud interne parcouru concerné est déterminée par des opérations bit à bit à partir d'un résultat booléen de la comparaison de la donnée d'entrée avec la clé d'un autre nœud ;
- une pluralité de clés de l'arbre est stockée de manière ordonnée dans au moins un emplacement mémoire du dispositif électronique ;
- pour chaque nœud interne parcouru, la clé du nœud interne parcouru concerné est chargée par dichotomie masquée depuis ledit au moins un emplacement mémoire du dispositif électronique ;
- le procédé comprend en outre une étape de détermination d'une donnée de sortie par sélection à partir du résultat d'échantillonnage, d'un échantillon de sortie dans un troisième tableau d'échantillons de sortie ;
- le procédé est mis en œuvre dans un algorithme cryptographique ;
- l'algorithme cryptographique est un algorithme parmi l'algorithme Hawk, l'algorithme FrodoKEM, l'algorithme Falcon et l'algorithme qTesla.

Selon un deuxième aspect, l'invention propose un programme d'ordinateur comprenant des instructions exécutables par un processeur et adaptées à mettre en œuvre un procédé de d'échantillonnage discret sécurisé tel que défini précédemment, lorsque ces instructions sont exécutées par le processeur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Au moins une partie des procédés selon l'invention peut être mise en œuvre par ordinateur. En conséquence, la présente invention peut prendre la forme d'un mode de réalisation entièrement matériel, d'un mode de réalisation entièrement logiciel (comportant les microprogrammes, les logiciels résidents, les microcodes, etc.) ou d'un mode de réalisation combinant des aspects logiciels et matériels qui peuvent tous être globalement appelés ici "bloc".

Selon un troisième aspect, l'invention propose un dispositif électronique apte à mettre en œuvre un échantillonnage discret sécurisé à partir d'une donnée d'entrée et d'un premier tableau de premiers seuils de décision ordonnés, le dispositif électronique comprenant :

- un bloc de recherche configuré pour rechercher un intervalle auxiliaire de décision comprenant la donnée d'entrée, en parcourant un arbre binaire parfait de recherche depuis un nœud racine jusqu'à une feuille, l'arbre comprenant le nœud racine, une pluralité de nœuds internes et une pluralité de feuilles, chaque nœud ayant une clé égale à un deuxième seuil de décision distinct d'un deuxième tableau de deuxièmes seuils de décision ordonnés, les deuxièmes seuils de décision du deuxième tableau définissant un premier multiensemble d'éléments de décision incluant un deuxième multiensemble d'éléments de décision défini par les premiers seuils de décision du premier tableau, chaque feuille étant un intervalle auxiliaire de décision semi-ouvert défini par une paire distincte de deuxièmes seuils successifs du deuxième tableau, chaque nœud interne d'une même profondeur ayant un incrément parmi un même ensemble de deux valeurs différentes associé à la profondeur concernée, des nœuds internes rattachés à un même autre nœud ayant des incréments de valeur différente, et chaque feuille de l'arbre ayant un incrément parmi un même autre ensemble de deux valeurs différentes tel que des feuilles rattachées à une même autre nœud ont des incréments de valeur différente, et
- un bloc de détermination d'un résultat d'échantillonnage, configuré pour déterminer un résultat d'échantillonnage par accumulation des incréments des nœuds internes et de la feuille de l'arbre parcourus pendant la recherche.

Ce dispositif électronique peut être configuré pour la mise en œuvre de chacune des possibilités de réalisation envisagées pour le procédé d'échantillonnage discret sécurisé tel que défini précédemment.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

D'autres caractéristiques et avantages de la présente invention ressortiront de la description faite ci-dessous, en référence aux figures annexées qui en illustrent des exemples de réalisation dépourvus de tout caractère limitatif.

Sur les figures :

Figure 1 représente schématiquement un mode de réalisation préféré d'un dispositif électronique selon l'invention ;

Figure 2 illustre sous forme de logigramme les étapes principales d'un procédé d'échantillonnage discret sécurisé à partir d'une donnée d'entrée selon l'invention ;

Figure 3 illustre un exemple d'arbre binaire parfait de recherche.

Sauf indications contraires, les éléments communs ou analogues à plusieurs figures portent les mêmes signes de référence et présentent des caractéristiques identiques ou analogues, de sorte que ces éléments communs ne sont généralement pas à nouveau décrits par souci de simplicité.

Dans le cadre de la présente description, des qualificatifs « premier », « deuxième » et « troisième » ne sont qu'à titre indicatif pour distinguer des éléments qu'ils qualifient, mais n'impliquent pas d'ordre entre eux.

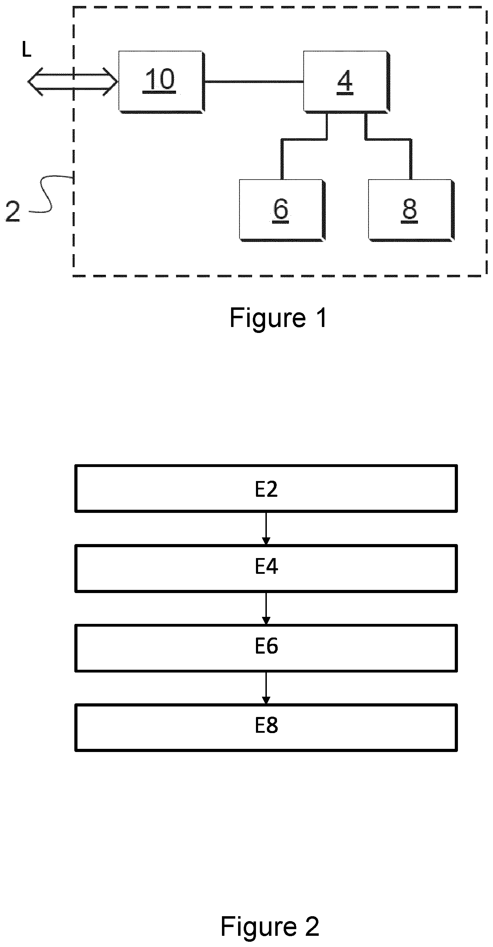

La figure 1 représente schématiquement un dispositif électronique 2 comprenant un processeur 4 (par exemple un microprocesseur), une entité de mémorisation 6, une mémoire vive 8 et une entité de communication 10.

La mémoire vive 8 et l'entité de mémorisation 6 sont chacune liées au processeur 4 de sorte que le processeur 4 peut lire ou écrire des données dans l'entité de mémorisation 6 et/ou la mémoire vive 8.

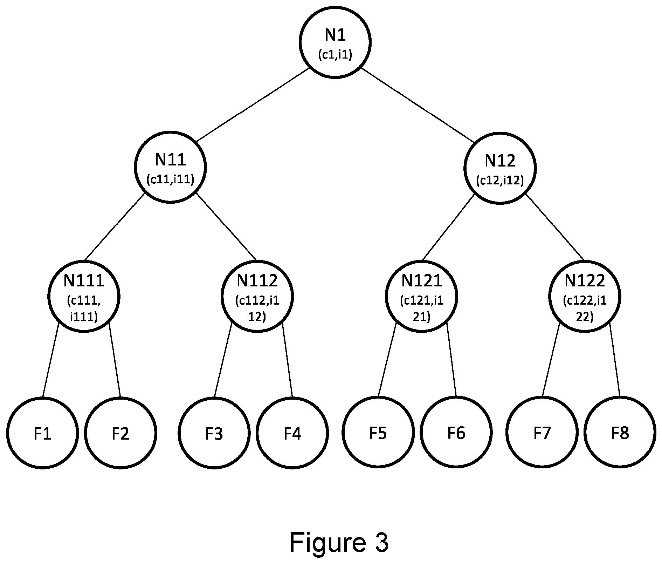

L'entité de mémorisation 6 mémorise des instructions de programme d'ordinateur, dont certaines sont conçues pour mettre en œuvre un procédé tel que décrit en référence à l'une des figures 2 et 3, lorsque ces instructions sont exécutées par le processeur 4.

L'entité de mémorisation 6 est par exemple un disque dur ou une mémoire non-volatile, éventuellement réinscriptible, par exemple de type EEPROM (pour "Electrically Erasable and Programmable Read-Only Memory" selon l'appellation anglo-saxonne couramment utilisée).

La mémoire vive 8 peut quant à elle mémoriser certains au moins des éléments (par exemples un accumulateur, une clé ou plusieurs clés, un résultat d'échantillonnage, un résultat booléen ou plusieurs résultats booléen tels que décrits en référence au moins à une figure parmi les figures 2 et 3) manipulés lors des différents traitements effectués au cours d'un des procédés décrits ci-après.

On appelle mémoire dans la suite de la description, l'une quelconque parmi l'entité de mémorisation 6 et la mémoire vive 8.

Le dispositif électronique 2 comporte également plusieurs blocs (non représentés).

Typiquement, le dispositif électronique 2 comporte un bloc de recherche et un bloc de détermination.

Le dispositif électronique 2 peut comporter en outre un bloc d'initialisation, un bloc de sortie et/ou un bloc cryptographique.

Chaque bloc possède une fonctionnalité décrite dans l'un des procédés conformes à l'invention et décrit ci-après en référence aux figures 2 et 3. Ainsi, pour chaque bloc, le dispositif électronique 2 mémorise par exemple des instructions de logiciel exécutables par le processeur 4 du dispositif électronique 2 afin d'utiliser un élément matériel (par exemple une entité de communication ou une mémoire) et de mettre ainsi en œuvre la fonctionnalité offerte par le bloc.

Selon une possibilité de réalisation, les instructions de programme d'ordinateur mémorisées dans l'entité de mémorisation 6 ont par exemple été reçues (typiquement d'un ordinateur distant) lors d'une phase de fonctionnement du dispositif électronique 2 antérieure aux procédés décrits en référence aux figures 2 et 3.

L'entité de communication 10 est reliée au processeur 4 de manière à permettre au processeur 4 de recevoir des données en provenance d'un autre dispositif électronique (non représenté) et/ou d'émettre des données à destination d'un autre dispositif électronique (non représenté). Dans certains modes de réalisation, le processeur 4 peut ainsi recevoir une donnée L de l'autre dispositif électronique, par exemples les instructions de programme d'ordinateur et/ou un message d'entrée, et /ou émettre un message de sortie. Un message d'entrée est par exemple un message que le dispositif électronique 2 doit signer à l'aide d'une clé cryptographique, la mise en œuvre de la signature comprenant un échantillonnage discret sécurisé avec un procédé tel que décrit en référence aux figures 2 et 3. Un message de sortie est par exemple le résultat de ladite signature.

Le dispositif électronique 2 peut prendre de nombreuses formes (non représentées).

Selon un premier exemple, le dispositif électronique est une carte à puce, telle qu'une carte d'identité, une carte bancaire ou une carte à circuit intégré universelle (également connue sous le nom de carte UICC pour « Universal Integrated Circuit Card » en terminologie anglo-saxonne).

Dans ce cas, l'entité de communication 10 comprend par exemple des contacts affleurant sur une face de la carte à puce. En variante, l'entité de communication 10 pourrait être réalisée par un bloc de communication sans contact. De manière générale, l'entité de communication 10 peut être un bloc de communication filaire ou sans fil avec une autre entité électronique.

Selon un deuxième exemple, le dispositif électronique est un élément sécurisé, tel qu'un microcontrôleur sécurisé, qui est intégré à un autre dispositif électronique, typiquement un terminal de communication ou une voiture.

Selon d'autres exemples, le dispositif électronique est une clé usb, un téléphone mobile, un ordinateur personnel, un serveur ou un document d'identité, tel qu'un passeport électronique.

Comme on le verra par la suite, le dispositif électronique 2 est configuré pour faire un échantillonnage discret sécurisé à partir d'une donnée d'entrée et d'un premier tableau de premiers seuils de décision ordonnés. Le dispositif électronique 2 peut en outre être configuré pour mettre en œuvre un algorithme cryptographique comprenant au moins un échantillonnage discret sécurisé selon un procédé de l'invention, par exemple tel que décrit en référence à la figure 2 ou à la figure 3.

La figure 2 illustre sous forme de logigramme les étapes principales d'un procédé d'échantillonnage discret sécurisé à partir d'une donnée d'entrée selon l'invention.

Plus précisément, le procédé de la figure 2 vise à mettre en œuvre un échantillonnage discret sécurisé à partir d'une donnée d'entrée et d'un premier tableau de premiers seuils de décision ordonnés. Chaque paire de premiers seuils de décision successifs dudit premier tableau définissent un intervalle de décision semi-ouvert. Le premier tableau a un premier nombre de premiers seuils de décision.

Un procédé d'échantillonnage discret est un algorithme ou une méthode utilisée pour générer des échantillons, c'est-à-dire des résultats d'échantillonnage, à partir d'une distribution discrète définie par les premiers seuils de décision du premier tableau, plus précisément par les tailles respectives des intervalles de décision semi-ouvert définis par les premiers seuils de décision du premier tableau. En d'autres termes, il permet de créer des valeurs de sortie discrètes, les résultats d'échantillonnage, qui suivent ladite distribution.

La distribution discrète est par exemple une distribution gaussienne discrète. Dans cet exemple, le procédé d'échantillonnage discret permet de créer des valeurs qui suivent ladite distribution gaussienne.

Les premiers seuils de décision du premier tableau sont également dénommés niveaux de décision. Ces niveaux de décision déterminent les intervalles dans lesquels les valeurs de la donnée d'entrée sont mappées à des valeurs de sorties. La taille d'un intervalle est la différence entre sa borne supérieure et sa borne inférieure.

L'échantillonnage discret sécurisé est ici mis en œuvre par le dispositif électronique 2 du fait de l'exécution des instructions de programme d'ordinateur mémorisées dans l'entité de mémorisation 6 comme indiqué ci-dessus.

Le procédé peut être mis en œuvre dans un algorithme cryptographique.

Le procédé permet ainsi l'implémentation de cet algorithme cryptographique dans un dispositif ayant des ressources calculatoires limitées, typiquement dans un élément sécurisé, une carte à puce, une clé USB ou un document d'identité.

L'algorithme cryptographique est typiquement mis en œuvre par le bloc cryptographique du dispositif électronique 2.

L'algorithme cryptographique peut être un algorithme parmi l'algorithme Hawk, l'algorithme FrodoKEM, l'algorithme Falcon et l'algorithme qTesla.

Le procédé est particulièrement avantageux pour la mise en œuvre de ces algorithmes qui nécessitent de nombreux échantillonnages discrets sécurisés et permet de renforcer leurs résistances aux attaques par canaux auxiliaires.

Selon une étape (étape E2) d'initialisation, le processeur 4 peut initialiser un résultat d'échantillonnage à une valeur prédéterminée.

L'étape d'initialisation est typiquement mise en œuvre par le bloc d'initialisation du dispositif électronique 2.

Le procédé comprend alors une étape (étape E4) de recherche d'un intervalle auxiliaire de décision comprenant la donnée d'entrée, pendant laquelle le processeur 4 recherche un intervalle auxiliaire de décision comprenant la donnée d'entrée, en parcourant un arbre binaire parfait de recherche depuis un nœud racine jusqu'à une feuille.

Un arbre binaire est une structure de données qui peut se représenter sous la forme d'une hiérarchie dont chaque composant est appelé nœud ou feuille.

Le composant initial est appelé nœud racine. Dans un arbre binaire, chaque composant possède deux composants fils au niveau inférieur, habituellement appelés gauche et droit, ou aucun composant fils. Du point de vue de ces composants fils, le composant dont ils sont issus au niveau supérieur est appelé composant père.

Au niveau le plus élevé, niveau 0, il y a le nœud racine. Au niveau directement inférieur, il y a au plus deux composants fils. En continuant à descendre aux niveaux inférieurs, on peut en avoir quatre, puis huit, seize, etc., c'est-à-dire la suite des puissances de deux.

Un composant n'ayant aucun fils est appelé feuille.

Un composant distinct du nœud racine et des feuilles est appelé nœud interne.

Chaque nœud interne est un composant fils rattaché à un autre nœud, un composant père, qui est un nœud interne ou le nœud racine. De même, chaque feuille est un composant fils rattaché à un autre nœud, un composant père, qui est un nœud interne ou le nœud racine.

Le niveau d'un composant, autrement dit la distance entre ce composant et le nœud racine, est appelé profondeur. Par exemples, le nœud racine est de profondeur 0 et les nœuds internes fils du nœud racine sont de profondeur 1. La hauteur de l'arbre est la profondeur maximale d'un composant. La hauteur d'un arbre binaire parfait de recherche est le nombre de niveaux de l'arbre, en commençant par le nœud racine, c'est à dire le niveau 0, jusqu'aux feuilles, c'est-à-dire le dernier niveau. En d'autres termes, c'est la longueur du chemin le plus long du nœud racine à une feuille. Un arbre réduit à un seul composant est de hauteur 0.

Un arbre binaire parfait est un arbre binaire dans lequel toutes les feuilles sont à la même distance du nœud racine (c'est-à-dire à la même profondeur). Il s'agit d'un arbre dont tous les niveaux sont remplis : où tous les nœuds ont deux fils et où toutes les feuilles ont la même profondeur.

Dans un arbre de recherche, une clé est une valeur associée à chaque nœud de l'arbre. Cette clé est utilisée pour organiser et rechercher les feuilles.

Un sous-arbre est un arbre qui est une partie d'un autre arbre plus grand.

Un nœud interne et ses descendants définissent un sous-arbre.

Dans un arbre binaire de recherche, chaque nœud interne possède une clé telle que les clés dans le sous-arbre gauche sont inférieures ou égales à la clé du nœud interne concerné et les clés dans le sous-arbre droit sont supérieures ou égales à la clé dudit nœud concerné.

La recherche dans un arbre binaire d'une feuille est un procédé récursif. On commence par examiner le nœud racine. Si la donnée d'entrée est inférieure ou égale à la clé du nœud racine, alors la feuille recherchée, c'est à dire l'intervalle auxiliaire recherché, est dans le sous-arbre gauche, sur lequel on effectue alors récursivement la recherche. De même si la donnée d'entrée est strictement supérieure à la clé du nœud racine, la recherche continue dans le sous-arbre droit.

Dans l'étape (étape E4) de recherche d'un intervalle auxiliaire de décision, l'arbre binaire parfait de recherche comprend un nœud racine, une pluralité de nœuds internes et une pluralité de feuilles :

- chaque nœud ayant une clé égale à un deuxième seuil de décision distinct d'un deuxième tableau de deuxièmes seuils de décision ordonnés, les deuxièmes seuils de décision du deuxième tableau définissant un premier multiensemble d'éléments de décision incluant un deuxième multiensemble d'éléments de décision défini par les premiers seuils de décision du premier tableau,
- chaque feuille étant un intervalle auxiliaire de décision semi-ouvert défini par une paire distincte de deuxièmes seuils de décision successifs du deuxième tableau,
- chaque nœud interne d'une même profondeur a un incrément parmi un même ensemble de deux valeurs différentes associé à la profondeur concernée, des nœuds internes rattachés à un même autre nœud ayant des incréments de valeur différente,
- chaque feuille de l'arbre ayant un incrément parmi un même autre ensemble de deux valeurs différentes tel que des feuilles rattachées à une même nœud ont des incréments de valeur différente.

Le deuxième tableau a un deuxième nombre de deuxièmes seuils de décision.

Un multiensemble est un ensemble dans lequel chaque élément peut apparaître plusieurs fois. Autrement dit, un multiensemble est une généralisation de la notion d'ensemble, un ensemble ordinaire étant un multiensemble dans lequel chaque élément apparaît au plus une seule fois.

On nomme multiplicité d'un élément donné le nombre de fois où ledit élément donné apparaît dans un multiensemble.

Un multiensemble B inclus un multiensemble A si pour chaque élément du multiensemble A, la multiplicité de l'élément concerné dans le multiensemble A est inférieure ou égale la multiplicité dudit élément dans le multiensemble B.

Ainsi, chaque deuxième seuil de décision est dans le premier multiensemble en tant qu'élément de décision. En outre, chaque premier seuil de décision est dans le deuxième multiensemble en tant qu'élément de décision, la multiplicité dudit élément de décision dans le premier multiensemble étant inférieure ou égale à sa multiplicité dans le deuxième sous-ensemble.

L'utilisation d'un tel arbre binaire parfait de recherche permet un échantillonnage discret de la donnée d'entrée, à temps constant avec une uniformisation du traitement des branches, tout en limitant le nombre de comparaison mis en œuvre.

Comme déjà décrit, la recherche dans un arbre binaire d'une feuille est un procédé récursif. On commence par examiner le nœud racine. Si la donnée d'entrée est inférieure ou égale à la clé du nœud racine, alors la feuille recherchée, c'est à dire l'intervalle auxiliaire recherché, est dans le sous-arbre gauche, sur lequel on effectue alors récursivement la recherche. De même si la donnée d'entrée est strictement supérieure à la clé du nœud racine, la recherche continue dans le sous-arbre droit.

L'étape de recherche d'un intervalle auxiliaire de décision est typiquement mise en œuvre par le bloc de recherche du dispositif électronique 2.

La figure 3 illustre un exemple d'arbre binaire parfait de recherche.

Dans cet exemple, l'arbre a un nœud racine N1, six nœuds internes N11,N12,N111,N112,N121,N122, et huit feuilles F1,...,F8.

Chaque nœud Nv, v étant l'indice du nœud, a une clé cv et un incrément iv. Par exemple, le nœud racine N1 a une clé c1 et un incrément i1, et le nœud interne N121 a une clé c121 et un incrément i121.

Chaque nœud de l'arbre illustré figure 3, possède deux fils.

Par exemples, les nœuds internes N11 et N12 sont les fils du nœud racine N1, plus précisément le nœud interne N11 est le fils gauche du nœud racine N1 et le nœud interne N12 est le fils droit du nœud racine N1, les nœuds internes N111 et N112 sont les fils du nœud interne N11, plus précisément le nœud interne N111 est le fils gauche du nœud interne N11 et le nœud interne N112 est le fils droit du nœud interne N11, et les feuilles F1 et F2 sont des composants fils du nœud interne N111, la feuille F1 étant le composant fils gauche du nœud interne N111 et la feuille F2 étant le composant fils droit du nœud interne N111.

L'arbre illustré figure 3 comprend des sous-arbres.

Par exemple, les nœuds internes N11, N111 et N112, ainsi que les feuilles F1, F2, F3 et F4, définissent un sous-arbre, le sous-arbre gauche du nœud racine N1.

Selon un autre exemple, le nœud interne N122 et les feuilles F7 et F8 définissent un autre sous-arbre, le sous-arbre droit du nœud interne N12.

L'arbre illustré figure 3 a une hauteur de 3.

Les nœuds internes N11 et N12 ont la même profondeur, 1, c'est à dire le niveau 1. Les nœuds internes N111, N112, N121 et N122 ont une même profondeur, 2, c'est-à-dire le niveau 2, laquelle est différente de la profondeur des nœuds internes N11 et N12.

Le procédé de la figure 2 comprend également une étape (étape E6) de détermination d'un résultat d'échantillonnage, pendant laquelle le processeur 4 détermine un résultat d'échantillonnage par accumulation des incréments des nœuds internes et de la feuille de l'arbre parcourus pendant la recherche.

L'étape de détermination d'un résultat d'échantillonnage est typiquement mise en œuvre par le bloc de détermination du dispositif électronique 2.

Pour l'étape de recherche d'un intervalle auxiliaire de décision (étape E4) et l'étape de détermination d'un résultat d'échantillonnage (étape E6), le processeur 4 peut :

- pour chaque nœud parcouru, déterminer un résultat booléen par comparaison de la donnée d'entrée avec la clé du nœud parcouru concerné, et
- accumuler les incréments par des opérations bit à bit à partir desdits résultats booléen.

Une opération bit à bit est une opération ou exclusive, une opération ou, une opération et, une opération de complément à 2 ou une opération de décalage de bits. Comme décrit plus loin, une opération bit à bit peut être implémentée sous une forme sécurisée.

Typiquement, le processeur 4 détermine le résultat d'échantillonnage comme suit : $e = e + \left( \bigoplus_{i=0}^{n-1} \left( b_i \ll (n-1-i) \right) \right)$ avec $\oplus$ l'opération ou exclusif, e le résultat d'échantillonnage, n la hauteur de l'arbre binaire parfait de recherche, « l'opération de décalage de bits, et $b_i$ les résultats booléen, i étant la profondeur du nœud parcouru concerné et $\left( \bigoplus_{i=0}^{n-1} \left( b_i \ll (n-1-i) \right) \right)$ étant l'accumulation des incréments.

De préférence, l'addition est faite après avoir accumulé tous les incréments.

Ce mode d'implémentation est particulièrement adapté quand le deuxième tableau a peu de deuxièmes seuils de décision, typiquement quand le deuxième tableau a moins de 32 deuxièmes seuils de décision.

Selon le premier mode d'implémentation, pendant l'étape de recherche d'un intervalle auxiliaire de décision (étape E4) le processeur 4 peut déterminer pour chaque nœud interne parcouru, la clé du nœud interne parcouru concerné par des opérations bit à bit à partir d'un résultat booléen de la comparaison de la donnée d'entrée avec la clé d'un autre nœud.

Le procédé est ainsi particulièrement résistant aux attaques par canaux auxiliaires. Le procédé ne nécessite pas le stockage de toutes les clés des nœuds internes dans au moins un emplacement mémoire du dispositif électronique, ni le chargement de clés depuis ledit au moins un emplacement mémoire. Ce mode d'implémentation est particulièrement adapté quand le deuxième tableau a peu de deuxièmes seuils de décision, typiquement quand le deuxième tableau a moins de 32 deuxièmes seuils de décision.

Typiquement, le processeur 4 détermine la clé du nœud interne parcouru concerné en combinant avec une opération ou exclusif, une clé prédéterminée égale à la plus petite clé des nœuds de même profondeur que le nœud interne parcouru concerné, et un écart.

L'écart a pour valeur la différence pour l'opération ou exclusif, entre la clé prédéterminée et la valeur de la clé associée au nœud interne parcouru concerné.

Quand le nœud parcouru concerné est un nœud interne dont le père est le nœud racine, l'écart peut être calculé à partir d'une valeur prédéterminée et du résultat booléen de la comparaison de la donnée d'entrée avec la clé du nœud racine, la valeur prédéterminée ayant pour valeur la différence pour l'opération ou exclusif, entre la valeur des clés des deux nœuds fils du nœud racine. Typiquement, quand le nœud parcouru concerné est un nœud interne dont le père est le nœud racine, le processeur 4 détermine la clé dudit nœud parcouru concerné comme suit : $(p \cdot b_0) \oplus c_{1min}$ avec p la valeur prédéterminée, $b_0$ le résultat booléen de la comparaison de la donnée d'entrée avec la clé du nœud racine et $c_{1min}$ la clé prédéterminée, l'écart étant $p \cdot b_0$, et le résultat booléen de la comparaison de la donnée d'entrée avec la clé du nœud racine ayant pour valeur 0 si la donnée d'entrée est inférieure ou égale à la clé du nœud racine et 1 si la donnée d'entrée est strictement supérieure à la clé du nœud racine.

Si nous reprenons les notations de la figure 3, on a $c_{1min} = \min(c_{11}, c_{12}) = c_{11}$ et $p = c_{12} \oplus c_{11}$. Quand le nœud parcouru concerné est un nœud interne dont le père est un autre nœud interne, l'écart peut être calculé à partir de plusieurs autres valeurs prédéterminées et des résultats booléens des comparaisons entre la donnée d'entrée et les clés des nœuds déjà parcourus.

Les autres valeurs prédéterminées ont pour valeur la différence entre des valeurs de clés de nœuds de même profondeur et qui sont à la profondeur du nœud parcouru concerné ou d'un nœud déjà parcouru.

Par exemple, en reprenant les notations de la figure 3, si le nœud parcouru concerné est de profondeur 2, c'est-à-dire si le nœud parcouru concerné est un nœud interne parmi les nœuds N111, N112, N121 et N122, le processeur 4 peut calculer la clé dudit nœud parcouru concerné comme suit : $c_{1min} \oplus (p_{111,121} \cdot b_0) \oplus (b_1 \cdot (p_{111,112} \oplus (b_0 \cdot p_{111,112,121,122})))$ avec · l'opérateur bit à bit et, $p_{111,121}$, $p_{111,112}$ et $p_{111,112,121,122}$ les autres valeurs prédéterminées, $b_0$ le résultat booléen de la comparaison de la donnée d'entrée avec la clé du nœud racine, $b_1$ le résultat booléen de la comparaison de la donnée d'entrée avec la clé du nœud parcouru de profondeur 1, et $c_{1min}$ la clé prédéterminée, le résultat booléen de la comparaison de la donnée d'entrée avec le nœud parcouru de profondeur 1 ayant pour valeur 0 si la donnée d'entrée est inférieur ou égale à la clé du nœud parcouru de profondeur 1 et 1 si la donnée d'entrée est supérieure à la clé du nœud parcouru de profondeur 1.

Si nous reprenons les notations de la figure 3, on a :

- $c_{1min} = \min(c_{111}, c_{112}, c_{121}, c_{122}) = c_{111}$ ;

- $p111,121 = c_{121} \oplus c_{111}$ ;

- $p_{111,112} = c_{112} \oplus c_{111}$ ;

- $p_{111,112,121,122} = c_{122} \oplus c_{121} \oplus c_{112} \oplus c_{111}$.

On notera que $p_{111,112,121,122}$ s'obtient par combinaison avec l'opération ou exclusive des clés de tous les nœuds qui ont la même profondeur que le nœud parcouru concerné.

L'écart décrit ci-avant est $(p_{111,121} \cdot b_0) \oplus (b_1 \cdot (p_{111,112} \oplus (b_0 \cdot p_{111,112,121,122})))$.

Le terme $(p_{111,121} \cdot b_0)$ permet d'obtenir depuis $c_{1min}$ ; la plus petite clé des nœuds fils du nœud interne parcouru de profondeur 1.

Le terme $(b_1 \cdot (p_{111,112} \oplus (b_0 \cdot p_{111,112,121,122})))$ permet d'obtenir la clé du nœud parcouru concerné depuis la plus petite clé des nœuds fils du nœud interne parcouru de profondeur 1, $(b_0 \cdot p_{111,112,121,122})$ permettant d'adapter le calcul selon le nœud interne parcouru de profondeur 1. On notera que la clé d'un nœud interne parcouru de profondeur y peut être obtenue par combinaison avec l'opération ou exclusif d'une pluralité de $2^y$ produits, chaque produit de la pluralité étant le résultat de la combinaison avec l'opération et d'une clé d'un nœud distinct de profondeur y et, pour chaque nœud de profondeur strictement inférieur à y à parcourir pour atteindre ledit nœud distinct de profondeur y, d'un autre résultat booléen de la comparaison de la donnée d'entrée avec la clé dudit nœud de profondeur strictement inférieur à y à parcourir si le nœud distinct de profondeur y est dans le sous arbre droit dudit nœud de profondeur strictement inférieur à y à parcourir, ou du complément à 1 de l'autre résultat booléen de la comparaison de la donnée d'entrée avec la clé du nœud de profondeur strictement inférieur à y à parcourir si le nœud distinct de profondeur y est dans le sous arbre gauche dudit nœud de profondeur strictement inférieur à y à parcourir.

Cependant, ce calcule nécessite l'application de nombreuses opérations et.

Pour limiter la consommation de ressources calculatoires du dispositif électronique, il est préférable de simplifier ces calculs en utilisant les propriétés suivantes : pour tout booléen b et pour tous entiers a et c, $\overline{b} \cdot a = (b \cdot a) \oplus a$ et $(b \cdot a) \oplus (b \cdot c) = b \cdot (a \oplus c)$.

Ainsi, en reprenant les notations de la figure 3, quand le nœud parcouru concerné est un nœud interne dont le père est le nœud racine, la valeur de la clé du nœud parcouru concerné peut être déterminée comme suit : $(\overline{b_0} \cdot c_{11}) \oplus (b_0 \cdot c_{12})$, $\overline{b_0} \cdot c_{11}$ et $b_0 \cdot c_{12}$ étant chacun un produit.

Le nœud interne parcouru est ici de profondeur 1. Il n'y a qu'un nœud de profondeur strictement inférieure à 1 à parcourir, le nœud racine, pour atteindre le nœud N11, respectivement le nœud N12. Chacun des nœuds N11 et N12 est un nœud distinct de profondeur 1. L'autre résultat booléen de la comparaison de la donnée d'entrée avec la clé dudit nœud de profondeur strictement inférieur à 1 à parcourir est $b_0$. Le complément à 1 de l'autre résultat booléen de la comparaison de la donnée d'entrée avec la clé dudit nœud de profondeur strictement inférieur à 1 à parcourir est $\overline{b_0}$. $\overline{b_0} \cdot c_{11}$ est le résultat

de la combinaison avec l'opération et d'une clé d'un nœud distinct de profondeur y, la clé du nœud N11 et, pour chaque nœud de profondeur strictement inférieur à y à parcourir pour atteindre ledit nœud distinct de profondeur y, ici le nœud racine, du complément à 1 de l'autre résultat booléen de la comparaison de la donnée d'entrée avec la clé du nœud de profondeur strictement inférieur à y à parcourir, $\overline{b_0}$, le nœud distinct de profondeur y, N11, étant dans le sous arbre gauche dudit nœud de profondeur strictement inférieur à y à parcourir, le nœud racine. $b_0 \cdot c_{12}$ est le résultat de la combinaison avec l'opération et d'une clé d'un nœud distinct de profondeur y, la clé du nœud N12 et, pour chaque nœud de profondeur strictement inférieur à y à parcourir pour atteindre ledit nœud distinct de profondeur y, ici le nœud racine, d'un autre résultat booléen de la comparaison de la donnée d'entrée avec la clé du nœud de profondeur strictement inférieur à y à parcourir, $b_0$, le nœud distinct de profondeur y, N12, étant dans le sous arbre droit dudit nœud de profondeur strictement inférieur à y à parcourir, le nœud racine.

Comme mentionné, il est préférable de simplifier ce calcul en utilisant la propriété évoquée ci-avant : $(\overline{b_0} \cdot c_{11}) \oplus (b_0 \cdot c_{12}) = (b_0 \cdot c_{11}) \oplus c_{11} \oplus (b_0 \cdot c_{12}) = (b_0 \cdot (c_{11} \oplus c_{12})) \oplus c_{11} = (p \cdot b_0) \oplus c_{1min}$.

Le processeur 4 peut donc avantageusement déterminer la clé du nœud parcouru concerné comme précédemment indiqué, c'est-à-dire comme suit : $(p \cdot b_0) \oplus c_{1min}$.

De même, toujours en reprenant les notations de la figure 3, si le nœud parcouru concerné est de profondeur 2, c'est-à-dire si le nœud est un parmi les nœuds N111, N112, N121 et N122, la valeur de la clé du nœud parcouru concerné peut être déterminée comme suit : $(\overline{b_0} \cdot \overline{b_1} \cdot c_{111}) \oplus (\overline{b_0} \cdot b_1 \cdot c_{112}) \oplus (b_0 \cdot \overline{b_1} \cdot c_{121}) \oplus (b_0 \cdot b_1 \cdot c_{122})$, $\overline{b_0} \cdot \overline{b_1} \cdot c_{111}$, $\overline{b_0} \cdot b_1 \cdot c_{112}$, $b_0 \cdot \overline{b_1} \cdot c_{121}$ et $b_0 \cdot b_1 \cdot c_{122}$ étant chacun un produit.

Le nœud interne parcouru est ici de profondeur 2. Il y a deux nœuds de profondeur strictement inférieur à 2 à parcourir, le nœud racine N1 et un nœud de profondeur 1 parmi les nœuds N11 et N12. L'autre résultat booléen de la comparaison de la donnée d'entrée avec la clé dudit nœud racine à parcourir est $b_0$. Le complément à 1 de l'autre résultat booléen de la comparaison de la donnée d'entrée avec la clé dudit nœud racine à parcourir est $\overline{b_0}$.

L'autre résultat booléen de la comparaison de la donnée d'entrée avec la clé du nœud de profondeur 1 à parcourir est $b_1$. Le complément à 1 de l'autre résultat booléen de la comparaison de la donnée d'entrée avec la clé dudit nœud de profondeur 1 à parcourir est $\overline{b_1}$.

Comme déjà mentionné, il est préférable de simplifier ce calcul en utilisant la propriété évoquée ci-avant :

$$\left(\overline{b_0} \cdot \overline{b_1} \cdot c_{111}\right) \oplus \left(\overline{b_0} \cdot b_1 \cdot c_{112}\right) \oplus \left(b_0 \cdot \overline{b_1} \cdot c_{121}\right) \oplus \left(b_0 \cdot b_1 \cdot c_{122}\right)$$

$$= \left(\overline{b_1} \cdot \left(\left(\overline{b_0} \cdot c_{111} \cdot\right) \oplus (b_0 \cdot c_{121})\right)\right) \oplus \left(b_1 \cdot \left(\left(\overline{b_0} \cdot c_{112}\right) \oplus (b_0 \cdot c_{122})\right)\right)$$

$$= \left(\overline{b_1} \cdot \left((b_0 \cdot c_{111}) \oplus c_{111} \oplus (b_0 \cdot c_{121})\right)\right) \oplus \left(b_1 \cdot \left((b_0 \cdot c_{112}) \oplus c_{112} \oplus (b_0 \cdot c_{122})\right)\right)$$

$$= \left(\overline{b_1} \cdot \left((b_0 \cdot (c_{111} \oplus c_{121})) \oplus c_{111}\right)\right) \oplus \left(b_1 \cdot \left((b_0 \cdot (c_{112} \oplus c_{122})) \oplus c_{112}\right)\right)$$

$$= \left(b_1 \cdot \left((b_0 \cdot (c_{111} \oplus c_{121})) \oplus c_{111}\right)\right) \oplus (b_0 \cdot (c_{111} \oplus c_{121})) \oplus c_{111}$$
$$\oplus \left(b_1 \cdot \left((b_0 \cdot (c_{112} \oplus c_{122})) \oplus c_{112}\right)\right)$$

$$= \left(b_1 \cdot \left((b_0 \cdot (c_{111} \oplus c_{112} \oplus c_{121} \oplus c_{122})) \oplus c_{111} \oplus c_{112}\right)\right) \oplus (b_0 \cdot (c_{111} \oplus c_{121})) \oplus c_{111}$$

$$= \left(b_1 \cdot \left((b_0 \cdot (p_{111,112,121,122})) \oplus p_{111,112}\right)\right) \oplus (b_0 \cdot (p_{111,121})) \oplus c_{1min}$$

Le processeur 4 peut donc bien de façon avantageuse déterminer la clé du nœud interne parcouru concerné comme suit : $c_{1min} \oplus (p_{111,121} \cdot b_0) \oplus (b_1 \cdot (p_{111,112} \oplus (b_0 \cdot p_{111,112,121,122})))$.

Selon un deuxième mode d'implémentation, une pluralité de clés de l'arbre est stockée de manière ordonnée dans au moins un emplacement mémoire du dispositif électronique 2. Typiquement un tableau des clés des nœuds de l'arbre binaire parfait de recherche est stocké dans un emplacement de l'entité de mémorisation 6 ou de la mémoire vive 8. Les clés des nœuds de l'arbre binaire parfait de recherche sont ordonnées dans le tableau.

Selon ce deuxième mode d'implémentation, pendant l'étape de recherche d'un intervalle auxiliaire de décision (étape E4) le processeur 4 peut déterminer la clé du nœud racine en chargeant ladite clé du nœud racine depuis l'emplacement mémoire du dispositif électronique 2, typiquement depuis le tableau des clés des nœuds de l'arbre binaire parfait de recherche stocké dans un emplacement de l'entité de mémorisation 6 ou de la mémoire vive 8.

Toujours selon ce deuxième mode d'implémentation, pendant l'étape de recherche d'un intervalle auxiliaire de décision (étape E4) le processeur 4 peut déterminer pour chaque nœud interne parcouru, la clé du nœud interne parcouru concerné en chargeant ladite clé du nœud interne parcouru concerné par dichotomie masquée depuis ledit au moins un emplacement mémoire du dispositif électronique.

Le processeur 4 peut effectuer le chargement par dichotomie masquée en chargeant un couple de données depuis ledit au moins un emplacement mémoire du dispositif électronique, le couple de données étant constitué de la clé du nœud interne parcouru concerné et d'une clé factice calculée à partir de chaque clé d'au moins un autre nœud interne de même profondeur que le nœud interne parcouru concerné.

Ce mode d'implémentation est particulièrement adapté quand le deuxième tableau a de nombreux deuxièmes seuils de décision, typiquement quand le deuxième tableau a au moins 16 deuxièmes seuils de décision. Le chargement par dichotomie masquée est alors moins consommateurs en ressources calculatoires du dispositif électronique que des opérations bit à bit, tout en améliorant la résistance aux attaques par canaux auxiliaires.

Le chargement du couple de données permet d'empêcher un attaquant par canal auxiliaire de savoir quel est le nœud interne parcouru concerné, le chargement parcourant dans ledit au moins un emplacement mémoire du dispositif électronique, la clé du nœud interne parcouru concerné et au moins une clé d'un autre nœud interne de même profondeur.

En outre, le chargement par dichotomie masquée ne parcoure dans ledit au moins un emplacement mémoire du dispositif électronique, que des clés de nœuds ayant la même profondeur que le nœud interne parcouru concerné, c'est-à-dire la clé du nœud interne parcouru concerné et au moins une clé d'un autre nœud interne de même profondeur.

Typiquement le processeur 4, initialise le couple de données comme suit : $(d_1, d_2) = (z, z)$, $d_1$ et $d_2$ étant les données du couple de données et z étant une valeur d'initialisation.

La valeur d'initialisation z peut être par exemple 0. Selon un autre exemple, avantageux pour renforcer la sécurité du procédé contre les attaques par canaux auxiliaires, la valeur d'initialisation est une valeur déterminée par le processeur 4 par tirage aléatoire ou par tirage pseudo aléatoire.

Le processeur 4 peut alors parcourir la clé du nœud interne parcouru concerné et au moins une clé d'un autre nœud interne de même profondeur dans ledit au moins un emplacement mémoire du dispositif électronique et mettre à jour le couple de données comme suit :

- $d_1 = d_1 \oplus t$ quand le processeur 4 parcoure la clé du nœud interne parcouru concerné dans ledit au moins un emplacement mémoire, t étant ladite clé du nœud interne parcouru concerné ;
- $d_2 = d_2 \oplus t$ quand le processeur 4 parcoure une clé d'un autre nœud interne de même profondeur que le nœud interne parcouru concerné, dans ledit au moins un emplacement mémoire, t étant ladite clé d'un autre nœud interne de même profondeur dans ledit au moins un emplacement mémoire. Quand la valeur d'initialisation z est non nulle ou déterminée par tirage aléatoire ou par tirage pseudo aléatoire, le processeur 4 peut retrouver la clé du nœud interne parcouru concerné en combinant par l'opération ou exclusif la donnée $d_1$ du couple de données et la donnée d'initialisation z. Le procédé peut alors comprendre une étape (E8) de détermination d'une donnée de sortie, pendant laquelle le processeur 4 détermine une donnée de sortie par sélection à partir du résultat d'échantillonnage déterminé pendant l'étape de détermination d'un résultat d'échantillonnage (étape E6), d'un échantillon de sortie dans un troisième tableau d'échantillons de sortie.

Typiquement, le dispositif électronique mémorise un troisième tableau ayant le premier nombre diminué de 1 d'échantillons de sortie, les échantillons de sortie du troisième tableau ayant des indices respectifs allant de 0 au premier nombre diminué de 2, et le dispositif sélectionne l'échantillon de sortie ayant pour indice le résultat d'échantillonnage.

L'étape de détermination d'une donnée de sortie est typiquement mise en œuvre par le bloc de sortie du dispositif électronique 2.

Selon un premier exemple de mise en œuvre, le procédé d'échantillonnage discret sécurisé décrit en référence à la figure 2 est un échantillonnage gaussien d'un algorithme FrodoKEM-1344.

La donnée d'entrée est un entier compris entre 0 et 32767, c'est-à-dire que la donnée d'entrée appartient à un ensemble fini d'éléments d'entrée, les éléments d'entrée étant les entiers compris entre 0 et 32767.

Dans cet exemple, le premier tableau de premiers seuils de décision est un tableau ayant les premiers seuils de décision suivants : [-1, 9142, 23462, 30338, 32361, 32725, 32767]. Le premier tableau est un tableau de premiers seuils de décision ordonnés, les premiers seuils de décision étant ordonnés selon leur valeur, ici de la plus petite valeur, -1, à la plus grande valeur, 32767.

Le deuxième multiensemble a donc les éléments de décision suivants : -1, 9142, 23462, 30338, 32361, 32725, 32767. Ici, chaque élément de décision du deuxième multiensemble a une multiplicité de 1.

Le deuxième tableau de deuxièmes seuils de décision est un tableau ayant les deuxièmes seuils de décision ordonnés suivants : [-1, 9142, 23462, 30338, 32361, 32725, 32767, 32767]. Le deuxième tableau est un tableau de deuxièmes seuils de décision ordonnés, les deuxièmes seuils de décision étant ordonnés selon leur valeur, ici aussi de la plus petite valeur, -1, à la plus grande valeur, 32767. Le premier multiensemble a les éléments de décision suivants : -1, 9142, 23462, 30338, 32361, 32725, 32767, 32767. Ici, l'élément de décision 32767 du premier multiensemble a une multiplicité de 2, et chacun des autres éléments de décision du premier multiensemble a une multiplicité de 1. Pour un échantillonnage gaussien d'un algorithme FrodoKEM-1344, l'étape de détermination d'une donnée de sortie (étape E8) peut être omise. Cependant, pour illustrer cette étape, nous supposerons ici que l'étape de détermination d'une donnée de sortie est mise en œuvre, le troisième tableau d'échantillons de sortie étant un tableau ayant les échantillons de sorties suivants : [sa, sb, sc, sd, se, sf, sg] avec sa, sb, sc, sd, se, sf et sg des entiers relatifs.

Dans ce premier exemple de mise en œuvre, l'arbre binaire parfait de recherche est un arbre tel qu'illustré figure 3.

Le nœud racine N1 a une clé ayant pour valeur 32361.

Les nœuds internes N11, N12, N111, N112, N121 et N122 ont respectivement une clé ayant pour valeur : 23462, 32767, 9142, 30338, 32725 et 32767.

Les nœuds internes N11, N12, N111, N112, N121 et N122 ont respectivement un incrément ayant pour valeur : 0, 4, 0, 2, 0, 2.

Les nœuds internes N11, N12 ont donc un incrément parmi un même ensemble de deux valeurs différentes, 0 et 4, associé à la profondeur desdits nœuds internes N11 et N12. Les nœuds internes N11 et N12 sont rattachés à un même autre nœud, le nœud racine N1. Les incréments des nœuds internes N11 et N12 ont des valeurs différentes.

Les nœuds internes N111, N112, N121, N122 ont un incrément parmi un même ensemble de deux valeurs différentes, 0 et 2, associé à la profondeur desdits nœuds internes N111, N112, N121 et N122, des nœuds internes rattachés à un même autre nœud ayant des incréments de valeur différente. Les nœuds internes N111 et N112 sont rattachés à un même autre nœud, le nœud interne N11, et ont des incréments de valeur différente, respectivement 0 et 2. Les nœuds internes N121 et N122 sont rattachés à un même autre nœud, le nœud interne N12, et ont aussi des incréments de valeur différente, respectivement 0 et 2.

Les feuilles de l'arbre F1, F2, F3, F4, F5, F6, F7, F8 sont chacune un intervalle auxiliaire de décision semi ouvert défini par une paire distincte de deuxièmes seuils de décision successifs du deuxième tableau, respectivement : ]-1 ; 9142], ] 9142 ;23462], ]23462 ;30338], ]30338 ;32361], ]32361 ;32725], ]32725 ;32767], ]32767 ; 32767], ] 32767; 32767].

En outre, chaque paire distincte de deuxièmes seuils de décision successifs du deuxième tableau définit l'intervalle auxiliaire de décision d'une feuille de l'arbre binaire parfait.

Deux deuxièmes seuils de décision sont successifs s'ils se suivent directement dans le deuxième tableau. Un deuxième seuil de décision peut être considéré comme étant successif de lui-même, typiquement pour une des paires de deuxièmes seuils de décision successifs.

On notera que les autres intervalles de décision des feuilles F7 et F8 sont atypiques mais les feuilles F7 et F8 ne seront jamais parcourues. Leurs présences, notamment celle de la feuille F8, permettent à l'arbre binaire de recherche d'être parfait et de se sécuriser le procédé contre les attaques par canaux auxiliaires.

Les feuilles de l'arbre F1, F2, F3, F4, F5, F6, F7, F8 ont respectivement un incrément ayant pour valeur : 0, 1, 0, 1, 0, 1, 0, 1.

Chaque feuille de l'arbre a donc un incrément parmi un même autre ensemble de deux valeurs différentes, 0 et 1, tel que des feuilles rattachées à une même autre nœud ont des incréments de valeur différente. Les feuilles F1 et F2 sont par exemple rattachées à un même autre nœud, le nœud interne N111, et ont des incréments de valeur différente, respectivement 0 et 1. Les feuilles F5 et F6 sont, selon un autre exemple, rattachées à un même autre nœud, le nœud interne N121, et ont aussi des incréments de valeur différente, respectivement 0 et 1.

Selon le premier mode d'implémentation, pour l'étape de recherche d'un intervalle auxiliaire de décision (étape E4) et l'étape de détermination d'un résultat d'échantillonnage (étape E6), le processeur 4 met en œuvre les calculs suivants.

Le processeur 4 obtient le résultat booléen $b_0$ de la comparaison de la donnée d'entrée avec la clé du nœud racine tel que $b_0$ ait pour valeur 0 si la donnée d'entrée est inférieure ou égale à la clé du nœud racine et 1 si la donnée d'entrée est strictement supérieure à la clé du nœud racine, la clé du nœud racine ayant pour valeur 32361.

Le processeur 4 détermine alors la clé du nœud interne parcouru après le nœud racine, c'est-à-dire la clé d'un nœuds fils du nœud racine, parcouru, comme suit : $a_1 = (9305 \cdot b_0) \oplus 23462$, 9305 étant la valeur prédéterminée p et 23462 étant la clé prédéterminée.

Si la donnée d'entrée est inférieure ou égale à la clé du nœud racine, le nœud interne parcouru après le nœud racine est le nœud N11 de l'arbre tel qu'illustré figure 3 et la valeur calculée de $a_1$ est 23462, $b_0$ ayant pour valeur 0. La valeur calculée de $a_1$ est bien la valeur de la clé du nœud interne N11.

Si la donnée d'entrée est strictement supérieure à la clé du nœud racine, le nœud interne parcouru après le nœud racine est le nœud N12 de l'arbre tel qu'illustré figure 3 et la valeur calculée de $a_1$ est 32767, $b_0$ ayant pour valeur 1. La valeur calculée de $a_1$ est bien la valeur de la clé du nœud interne N12.

Le processeur 4 obtient alors le résultat booléen $b_1$ de la comparaison de la donnée d'entrée avec la clé du nœud parcouru de profondeur 1 tel que $b_1$ ait pour valeur 0 si la donnée d'entrée est inférieure ou égale à la clé du nœud parcouru de profondeur 1 et 1 si la donnée d'entrée est strictement supérieure à la clé du nœud parcouru de profondeur 1, la clé du nœud parcouru de profondeur 1 ayant pour valeur $a_1$.

Le processeur 4 détermine alors la clé du nœud interne parcouru après le nœud parcouru de profondeur 1, c'est-à-dire la clé du nœud de profondeur 2 parcouru, comme suit : $a_2 = 9142 \oplus (b_0 \cdot 23651) \oplus (b_1 \cdot (21812 \oplus (b_0 \cdot 21790)))$, 9142 étant la clé prédéterminée, 23651 étant l'autre valeur prédéterminée $p_{111,121}$, 21812 étant l'autre valeur prédéterminée $p_{111,112}$ et 21790 étant l'autre valeur prédéterminée $p_{111,112,121,122}$.

Si le nœud interne parcouru après le nœud parcouru de profondeur 1 est le nœud N111 de l'arbre tel qu'illustré figure 3, la valeur calculée de $a_2$ est bien 9142, $b_0$ et $b_1$ ayant pour valeur 0.

Si le nœud interne parcouru après le nœud parcouru de profondeur lest le nœud N112, la valeur calculée de $a_2$ est bien 30338, $b_0$ et $b_1$ ayant respectivement pour valeur 0 et 1.

Si le nœud interne parcouru après le nœud parcouru de profondeur lest le nœud N121, la valeur calculée de $a_2$ est bien 32725, $b_0$ et $b_1$ ayant respectivement pour valeur 1 et 0.

Enfin, si le nœud interne parcouru après le nœud parcouru de profondeur 1 est le nœud N122, la valeur calculée de $a_2$ est bien 32767, $b_0$ et $b_1$ ayant pour valeur 1.

Le processeur 4 obtient alors le résultat booléen $b_2$ de la comparaison de la donnée d'entrée avec la clé du nœud parcouru de profondeur 2 tel que $b_2$ ait pour valeur 0 si la donnée d'entrée est inférieure ou égale à la clé du nœud parcouru de profondeur 2 et 1 si la donnée d'entrée est strictement supérieure à la clé du nœud parcouru de profondeur 2, la clé du nœud parcouru de profondeur 2 ayant pour valeur $a_2$.

Le processeur 4 détermine alors le résultat d'échantillonnage e comme suit : $e = (b_0 \ll 2) \oplus (b_1 \ll 1) \oplus b_2$.

Selon le deuxième mode d'implémentation, le tableau des clés des nœuds de l'arbre binaire parfait de recherche, stocké dans un emplacement de l'entité de mémorisation 6 ou de la mémoire vive 8, est un tableau des clés ordonnées suivantes : [9142, 23462, 30338, 32361, 32725, 32767, 32767]. Pendant l'étape d'initialisation (étape E2), le processeur 4 initialise le résultat d'échantillonnage e et un accumulateur h comme suit : $e = 0$ et $h = 0$.

Pendant l'étape de recherche d'un intervalle auxiliaire de décision (étape E4) le processeur 4 détermine la clé du nœud racine en chargeant ladite clé du nœud racine depuis l'emplacement mémoire du dispositif électronique 2, c'est-à-dire en chargeant la clé stockée au milieu du tableau, c'est-à-dire en chargeant la valeur 32361.

Le processeur 4 obtient alors le résultat booléen $b_0$ de la comparaison de la donnée d'entrée avec la clé du nœud racine, tel que $b_0$ ait pour valeur 0 si la donnée d'entrée est inférieure ou égale à la clé du nœud racine et 1 si la donnée d'entrée est supérieure à la clé du nœud racine, la clé du nœud racine ayant pour valeur 32361.

Pendant l'étape de recherche d'un intervalle auxiliaire de décision (étape E4) et l'étape de détermination d'un résultat d'échantillonnage (étape E6), le processeur 4 met en œuvre les calculs suivants. Le processeur 4 accumule l'incrément du nœud parcouru après le nœud racine en mettant à jour l'accumulateur h comme suit : $h = h \oplus (b_0 \ll 2)$.

Le processeur 4 détermine alors la clé du nœud interne parcouru après le nœud racine en chargeant un couple de données $d_1$ et $d_2$.

Pour cela, le processeur 4 initialise le couple de données comme suit : $(d_1, d_2) = (z, z)$, z étant une valeur d'initialisation. Le processeur 4 parcourt toutes les clés de nœuds de profondeur 1 dans le tableau des clés ordonnées, à savoir la deuxième clé et la sixième clé dudit tableau, c'est-à-dire les valeurs 23462 et 32767, et le processeur 4 affecte respectivement aux données $d_1$ et $d_2$ du couple, la valeur égale à la clé du nœud interne parcouru après le nœud racine, et l'autre valeur parcourue.

Si la donnée d'entrée est inférieure ou égale à la clé du nœud racine, le nœud interne de profondeur 1 parcouru est le nœud N11 de l'arbre tel qu'illustré figure 3 et les données $d_1$ et $d_2$ du couple ont respectivement pour valeurs et $z \oplus$ 23462 et $z \oplus$ 32767 .

Si la donnée d'entrée est strictement supérieure à la clé du nœud racine, le nœud interne de profondeur 1 parcouru est le nœud N12 et les données $d_1$ et $d_2$ du couple ont respectivement pour valeurs $z \oplus$ 32767 et $z \oplus$ 23462.

Le processeur 4 retrouve alors la clé du nœud interne parcouru après le nœud racine en combinant par l'opération ou exclusif la donnée $d_1$ du couple et la donnée d'initialisation z, c'est-à-dire comme suit : $z \oplus d_1$.

Le processeur 4 obtient alors le résultat booléen $b_1$ de la comparaison de la donnée d'entrée avec la clé du nœud parcouru de profondeur 1 tel que $b_1$ ait pour valeur 0 si la donnée d'entrée est inférieure ou égale à la clé du nœud parcouru de profondeur 1 et 1 si la donnée d'entrée est strictement supérieure à la clé du nœud parcouru de profondeur 1, la clé du nœud parcouru de profondeur 1 ayant pour valeur $z \oplus d_1$

Le processeur 4 accumule alors l'incrément du nœud de profondeur 2 parcouru et met à jour l'accumulateur h comme suit : $h = h \oplus (b_1 \ll 1)$.

Ainsi, le processeur 4 compare la donnée d'entrée à $z \oplus d_1$ et affecte au résultat booléen $b_1$ la valeur 0 quand la donnée d'entrée est inférieure ou égale à $z \oplus d_1$ et, la valeur 1 quand la donnée d'entrée est strictement supérieure à $z \oplus d_1$.

Le processeur 4 détermine alors la clé du nœud interne parcouru après le nœud parcouru de profondeur 1, c'est-à-dire la clé du nœud de profondeur 2 parcouru, en chargeant un couple de données $d_1$ et $d_2$.

Pour cela, le processeur 4 initialise le couple de données comme suit : $(d_1, d_2) = (z, z)$, z étant une valeur d'initialisation. La valeur d'initialisation z peut avoir ici une valeur différente de celle utilisée pour le chargement de la clé du nœud parcouru de profondeur 1. Le processeur 4 parcourt toutes les clés de nœuds de profondeur 2 dans le tableau des clés ordonnées, à savoir la première clé, la troisième clé, la cinquième clé et la septième clé dudit tableau, c'est-à-dire les valeurs 9142, 30338, 32725 et 32767, et le processeur 4 affecte respectivement aux données $d_1$ et $d_2$ du couple, la valeur parcourue égale à la clé du nœud interne de profondeur 2 parcouru, et les autres valeurs parcourues. Si le nœud interne de profondeur parcouru est le nœud N111 de l'arbre tel qu'illustré figure 3, les données $d_1$ et $d_2$ du couple ont respectivement pour valeurs $z \oplus 9142$ et $z \oplus 30338 \oplus 32725 \oplus 32767$.

Si le nœud interne de profondeur 2 parcouru est le nœud N112, les données $d_1$ et $d_2$ du couple ont respectivement pour valeurs $z \oplus 30338$ et $z \oplus 9142 \oplus 32725 \oplus 32767$.

Si le nœud interne de profondeur 2 parcouru est le nœud N121, les données $d_1$ et $d_2$ du couple ont respectivement pour valeurs $z \oplus 32725$ et $z \oplus 9142 \oplus 30338 \oplus 32767$.

Enfin, le nœud interne de profondeur 2 parcouru est le nœud N122, les données $d_1$ et $d_2$ du couple ont respectivement pour valeurs $z \oplus 32767$ et $z \oplus 9142 \oplus 30338 \oplus 32725$.

L'affectation des autres valeurs parcourues se fait dans cet exemple par combinaison avec l'opération ou exclusive de la donnée $d_2$ du couple et de l'autre valeur parcourue à affecter.

Le processeur 4 retrouve alors la clé du nœud interne parcouru après le nœud parcouru de profondeur 1, en combinant par l'opération ou exclusif la donnée $d_1$ du couple de données et la donnée d'initialisation z, c'est-à-dire comme suit : $z \oplus d_1$.

Le processeur 4 obtient alors le résultat booléen $b_2$ de la comparaison de la donnée d'entrée avec la clé du nœud parcouru de profondeur 2 tel que $b_2$ ait pour valeur 0 si la donnée d'entrée est inférieure ou égale à la clé du nœud parcouru de profondeur 2 et 1 si la donnée d'entrée est strictement supérieure à la clé du nœud parcouru de profondeur 2, la clé du nœud parcouru de profondeur 2 ayant pour valeur $z \oplus d_1$.

Le processeur 4 accumule alors l'incrément de la feuille parcourue en mettant à jour l'accumulateur h comme suit : $h = h \oplus b_2$.

Le processeur 4 détermine le résultat d'échantillonnage comme suit : $e = e + h$.

Selon un premier exemple, quand la valeur de la donnée d'entrée est 11112, le procédé initialise le résultat d'échantillonnage à 0 pendant l'étape d'initialisation du résultat d'échantillonnage, puis parcourt les nœuds internes N11, N111 et la feuille F2 pendant l'étape de recherche (étape E4).

Le procédé accumule les incréments des nœuds internes et de la feuille de l'arbre parcourus, c'est-à-dire 0, 0 et 1 et obtient donc 1 comme résultat d'échantillonnage.

Le procédé peut alors déterminer la donnée de sortie, pendant l'étape de détermination d'une donnée de sortie, comme ayant la valeur sb en sélectionnant l'échantillon de sortie d'indice 1 du troisième tableau.

Selon un deuxième exemple, quand la valeur de la donnée d'entrée est 32767, le procédé initialise le résultat d'échantillonnage à 0 pendant l'étape d'initialisation du résultat d'échantillonnage, puis parcourt les nœuds internes N12, N121 et la feuille F6 pendant l'étape de recherche (étape E4).

Le procédé accumule les incréments des nœuds internes et de la feuille de l'arbre parcourus, c'est-à-dire 4, 0 et 1 et obtient 5 comme résultat d'échantillonnage.

Le procédé peut alors déterminer la donnée de sortie, pendant l'étape de détermination d'une donnée de sortie, comme ayant la valeur sf en sélectionnant l'échantillon de sortie d'indice 5 du troisième tableau.

Selon un deuxième exemple de mise en œuvre, le procédé d'échantillonnage discret sécurisé décrit en référence à la figure 2 est encore un échantillonnage gaussien d'un algorithme FrodoKEM-1344 et la donnée d'entrée est un entier compris entre 0 et 32767, c'est-à-dire que la donnée d'entrée appartient à un ensemble fini d'éléments d'entrée, les éléments d'entrée étant les entiers compris entre 0 et 32767.

Dans cet exemple, le premier tableau de premiers seuils de décision est encore un tableau ayant les premiers seuils de décision ordonnés suivants : [-1, 9142, 23462, 30338, 32361, 32725, 32767]. Le premier tableau est un tableau de premiers seuils de décision ordonnés, les premiers seuils de décision étant ordonnés selon leur valeur, ici de la plus petite valeur, -1, à la plus grande valeur, 32767. Le deuxième multiensemble a les éléments de décision suivants : -1, 9142, 23462, 30338, 32361, 32725, 32767. Ici, chaque élément de décision du deuxième multiensemble a une multiplicité de 1. Cependant, le deuxième tableau de deuxièmes seuils de décision est un tableau ayant les deuxièmes seuils de décision ordonnés suivants : [-1, -1, 9142, 23462, 30338, 32361, 32725, 32767]. Le deuxième tableau est un tableau de deuxièmes seuils de décision ordonnés, les deuxièmes seuils de décision étant ordonnés selon leur valeur, ici de la plus petite valeur, -1, à la plus grande valeur, 32767. Le premier multiensemble a les éléments de décision suivants : -1, -1, 9142, 23462, 30338, 32361, 32725, 32767. Ici, l'élément de décision -1 du premier multiensemble a une multiplicité de 2, et chacun des autres éléments de décision du premier multiensemble a une multiplicité de 1. Comme déjà évoqué, pour un échantillonnage gaussien d'un algorithme FrodoKEM-1344, l'étape de détermination d'une donnée de sortie (étape E8) peut être omise. L'algorithme FrodoKEM-1344 peut utiliser directement le résultat d'échantillonnage obtenu avec le procédé d'échantillonnage discret sécurisé selon l'invention. Cependant, pour illustrer cette étape, nous supposerons ici que l'étape de détermination d'une donnée de sortie est mise en œuvre, le troisième tableau d'échantillons de sortie étant un tableau ayant les échantillons de sorties suivants : [sa, sb, sc, sd, se, sf, sg] avec sa, sb, sc, sd, se, sf et sg des entiers relatifs.

Dans ce deuxième exemple de mise en œuvre, l'arbre binaire parfait de recherche est un arbre tel qu'illustré figure 3.

Le nœud racine N1 a une clé ayant pour valeur 30338.

Les nœuds internes N11, N12, N111, N112, N121 et N122 ont respectivement une clé ayant pour valeur : 9142, 32725, -1, 23462, 32361 et 32767.

Comme pour le premier exemple de mise en œuvre, les nœuds internes N11, N12, N111, N112, N121 et N122 ont respectivement un incrément ayant pour valeur : 0, 4, 0, 2, 0, 2.

Les feuilles de l'arbre F1, F2, F3, F4, F5, F6, F7, F8 sont chacune un intervalle auxiliaire de décision semi ouvert défini par une paire distincte de deuxièmes seuils de décision successifs du deuxième tableau, respectivement : ]-1 ; -1], ]-1 ; 9142], ]9142 ;23462], ]23462 ;30338], 130338 ;32361], ]32361 ;32725], ]32725 ;32767], ]32767 ; 32767 ].

En outre, chaque paire distincte de deuxièmes seuils de décision successifs du deuxième tableau définit l'intervalle auxiliaire de décision d'une feuille de l'arbre binaire parfait.

Deux deuxièmes seuils de décision sont successifs s'ils se suivent directement dans le deuxième tableau. Un deuxième seuil de décision peut être considéré comme étant successif de lui-même, typiquement pour une des paires de deuxièmes seuils de décision successifs.

On notera que les intervalles auxiliaires de décision des feuilles F1 et F8 sont atypiques mais les feuilles F1 et F8 ne seront jamais parcourues. Leurs présences, notamment celle de la feuille F1, permet à l'arbre binaire de recherche d'être parfait et de se sécuriser le procédé contre les attaques par canaux auxiliaires.

Les feuilles de l'arbre F1, F2, F3, F4, F5, F6, F7, F8 ont respectivement un incrément ayant pour valeur : 0, 1, 0, 1, 0, 1, 0, 1.

Dans ce deuxième exemple de mise en œuvre, le procédé initialise le résultat d'échantillonnage à -1 pendant l'étape d'initialisation (étape E2).

Pour l'étape de recherche d'un intervalle auxiliaire de décision (étape E4) et l'étape de détermination d'un résultat d'échantillonnage (étape E6), le processeur 4 exécute les opérations suivantes. Selon le premier mode d'implémentation, pour l'étape de recherche d'un intervalle auxiliaire de décision (étape E4) et l'étape de détermination d'un résultat d'échantillonnage (étape E6), le processeur 4 met en œuvre les calculs suivants.

Le processeur 4 obtient le résultat booléen $b_0$ de la comparaison de la donnée d'entrée avec la clé du nœud racine tel que $b_0$ ait pour valeur 0 si la donnée d'entrée est inférieure ou égale à la clé du nœud racine et 1 si la donnée d'entrée est strictement supérieure à la clé du nœud racine, la clé du nœud racine ayant pour valeur 30338.

Le processeur 4 détermine alors la clé du nœud interne parcouru après le nœud racine, c'est-à-dire un nœuds fils du nœud racine, parcouru, comme suit : $a_1 = (23651 \cdot b_0) \oplus 9142$ , 23651 étant la valeur prédéterminée p et 9142 étant la clé prédéterminée.

Si la donnée d'entrée est inférieure ou égale à la clé du nœud racine, le nœud interne parcouru après le nœud racine est le nœud N11 de l'arbre tel qu'illustré figure 3 et la valeur calculée de $a_1$ est 9142, $b_0$ ayant pour valeur 0. La valeur calculée de $a_1$ est bien la valeur de la clé du nœud interne N11.

Si la donnée d'entrée est strictement supérieure à la clé du nœud racine, le nœud interne parcouru après le nœud racine est le nœud N12 de l'arbre tel qu'illustré figure 3 et la valeur calculée de $a_1$ est 32725, $b_0$ ayant pour valeur 1. La valeur calculée de $a_1$ est bien la valeur de la clé du nœud interne N12.

Le processeur 4 obtient alors le résultat booléen $b_1$ de la comparaison de la donnée d'entrée avec la clé du nœud parcouru de profondeur 1 tel que $b_1$ ait pour valeur 0 si la donnée d'entrée est inférieure ou égale à la clé du nœud parcouru de profondeur 1 et 1 si la donnée d'entrée est strictement supérieure à la clé du nœud parcouru de profondeur 1, la clé du nœud parcouru de profondeur 1 ayant pour valeur $a_1$.

Le processeur 4 détermine alors la clé du nœud interne parcouru après le nœud parcouru de profondeur 1, c'est-à-dire la clé du nœud de profondeur 2 parcouru, comme suit : $a_2 = -1 \oplus (b_0 \cdot -32362) \oplus (b_1 \cdot (-23463 \oplus (b_0 \cdot -23089)))$, -1 étant la clé prédéterminée, -32362 étant l'autre valeur prédéterminée $p_{111,121}$, -23463 étant l'autre valeur prédéterminée $p_{111,112}$ et -23089 étant l'autre valeur prédéterminée $p_{411,112,121,122}$.

On notera que selon l'architecture du processeur 4, les autres valeurs prédéterminées peuvent avoir des valeurs positives équivalentes. Par exemples, si le processeur 4 a une architecture 16 bits, l'autre valeur prédéterminée $p_{111,121}$ peut être 33174, l'autre valeur prédéterminée $p_{111,112}$ peut être 42073 et l'autre valeur prédéterminée $p_{111,112,121,122}$ peut être 42447.

Il en est de même pour la clé prédéterminée. Par exemple, si le processeur 4 a une architecture 16 bits, la clé prédéterminée peut être 65535.

Si le nœud interne parcouru après le nœud parcouru de profondeur 1 est le nœud N111 de l'arbre tel qu'illustré figure 3, la valeur calculée de $a_2$ est bien -1, $b_0$ et $b_1$ ayant pour valeur 0.

Si le nœud interne parcouru après le nœud parcouru de profondeur 1 est le nœud N112, la valeur calculée de $a_2$ est bien 23462, $b_0$ et $b_1$ ayant respectivement pour valeur 0 et 1.

Si le nœud interne parcouru après le nœud parcouru de profondeur 1 est le nœud N121, la valeur calculée de $a_2$ est bien 32361, $b_0$ et $b_1$ ayant respectivement pour valeur 1 et 0.

Enfin, si le nœud interne parcouru après le nœud parcouru de profondeur 1 est le nœud N122, la valeur calculée de $a_2$ est bien 32767, $b_0$ et $b_1$ ayant pour valeur 1.

Le processeur 4 obtient alors le résultat booléen $b_2$ de la comparaison de la donnée d'entrée avec la clé du nœud parcouru de profondeur 2 tel que $b_2$ ait pour valeur 0 si la donnée d'entrée est inférieure ou égale à la clé du nœud parcouru de profondeur 2 et 1 si la donnée d'entrée est strictement supérieure à la clé du nœud parcouru de profondeur 2, la clé du nœud parcouru de profondeur 2 ayant pour valeur $a_2$.

Le processeur 4 détermine alors le résultat d'échantillonnage e comme suit : $e = -1 + ((b_0 \ll 2) \oplus (b_1 \ll 1) \oplus b_2)$.

Selon le deuxième mode d'implémentation, le tableau des clés des nœuds de l'arbre binaire parfait de recherche, stocké dans un emplacement de l'entité de mémorisation 6 ou de la mémoire vive 8, est un tableau les clés ordonnées suivantes : [-1, 9142, 23462, 30338, 32361, 32725, 32767]. Pendant l'étape d'initialisation (étape E2), le processeur 4 initialise le résultat d'échantillonnage e et un accumulateur comme suit : $e = -1$ et $h = 0$, h étant l'accumulateur.

Pendant l'étape de recherche d'un intervalle auxiliaire de décision (étape E4) le processeur 4 détermine la clé du nœud racine en chargeant ladite clé du nœud racine depuis l'emplacement mémoire du dispositif électronique 2, c'est-à-dire en chargeant la clé stockée au milieu du tableau, c'est-à-dire en chargeant la valeur 30338.

Le processeur 4 obtient alors le résultat booléen $b_0$ de la comparaison de la donnée d'entrée avec la clé du nœud racine, tel que $b_0$ ait pour valeur 0 si la donnée d'entrée est inférieure ou égale à la clé du nœud racine et 1 si la donnée d'entrée est strictement supérieure à la clé du nœud racine, la clé du nœud racine ayant pour valeur 30338.

Pendant l'étape de recherche d'un intervalle auxiliaire de décision (étape E4) et l'étape de détermination d'un résultat d'échantillonnage (étape E6), le processeur 4 met en œuvre les calculs suivants. Le processeur 4 accumule l'incrément du nœud parcouru après le nœud racine en mettant à jour l'accumulateur h comme suit : $h = h \oplus (b_0 \ll 2)$.

Le processeur 4 détermine alors la clé du nœud interne parcouru après le nœud racine en chargeant un couple de données $d_1$ et $d_2$.

Pour cela, le processeur 4 initialise le couple de données comme suit : $(d_1, d_2) = (z, z)$, z étant une valeur d'initialisation. Le processeur 4 parcourt toutes les clés de nœuds de profondeur 1 dans le tableau des clés ordonnées, à savoir la deuxième clé et la sixième clé dudit tableau, c'est-à-dire les valeurs 9142 et 32725, et le processeur 4 affecte respectivement aux données $d_1$ et $d_2$ du couple, la valeur égale à la clé du nœud interne parcouru après le nœud racine, et l'autre valeur parcourue.

Si la donnée d'entrée est inférieure ou égale à la clé du nœud racine, le nœud interne de profondeur 1 parcouru est le nœud N11 de l'arbre tel qu'illustré figure 3 et les données $d_1$ et $d_2$ du couple ont respectivement pour valeurs $z \oplus 9142$ et $z \oplus 32765$.

Si la donnée d'entrée est strictement supérieure à la clé du nœud racine, le nœud interne de profondeur 1 parcouru est le nœud N12 et les données $d_1$ et $d_2$ du couple ont respectivement pour valeurs $z \oplus 32765$ et $z \oplus 9142$.

Le processeur 4 retrouve alors la clé du nœud interne parcouru après le nœud racine en combinant par l'opération ou exclusif la donnée $d_1$ du couple et à la donnée d'initialisation z, c'est-à-dire comme suit : $z \oplus d_1$.

Le processeur 4 obtient alors le résultat booléen $b_1$ de la comparaison de la donnée d'entrée avec la clé du nœud parcouru de profondeur 1 tel que $b_1$ ait pour valeur 0 si la donnée d'entrée est inférieure ou égale à la clé du nœud parcouru de profondeur 1 et 1 si la donnée d'entrée est strictement supérieure à la clé du nœud parcouru de profondeur 1, la clé du nœud parcouru de profondeur 1 ayant pour valeur $z \oplus d_1$.

Le processeur 4 accumule alors l'incrément du nœud de profondeur 2 parcouru et met à jour l'accumulateur h comme suit : $h = h \oplus (b_1 \ll 1)$.

Ainsi, le processeur 4 compare la donnée d'entrée $z \oplus d_1$ et affecte au résultat booléen $b_1$ la valeur 0 quand la donnée d'entrée est inférieure ou égale à $z \oplus d_1$ et, la valeur 1 quand la donnée d'entrée est strictement supérieure à $z \oplus d_1$.

Le processeur 4 détermine alors la clé du nœud interne parcouru après le nœud parcouru de profondeur 1, c'est-à-dire la clé du nœud de profondeur 2 parcouru, en chargeant un couple de données $d_1$ et $d_2$.

Pour cela, le processeur 4 initialise le couple de données comme suit : $(d_1, d_2) = (z, z)$, z étant une valeur d'initialisation. La valeur d'initialisation z peut avoir ici une valeur différente de celle utilisée pour le chargement de la clé du nœud parcouru de profondeur 1. Le processeur 4 parcourt toutes les clés de nœuds de profondeur 2 dans le tableau des clés ordonnées, à savoir la première clé, la troisième clé, la cinquième clé et la septième clé dudit tableau, c'est-à-dire les valeurs -1, 23462, 32361 et 32767, et le processeur 4 affecte respectivement aux données $d_1$ et $d_2$ du couple, la valeur parcourue égale à la clé du nœud interne de profondeur 2 parcouru, et les autres valeurs parcourues. Si le nœud interne de profondeur 2 parcouru est le nœud N111 de l'arbre tel qu'illustré figure 3, les données $d_1$ et $d_2$ du couple ont respectivement pour valeurs $z \oplus -1$ et $z \oplus 23462 \oplus 32361 \oplus 32767$.

Si le nœud interne de profondeur 2 parcouru est le nœud N112, les données $d_1$ et $d_2$ du couple ont respectivement pour valeurs $z \oplus 23462$ et $z \oplus -1 \oplus 32361 \oplus 32767$.

Si le nœud interne de profondeur 2 parcouru est le nœud N121, les données $d_1$ et $d_2$ du couple ont respectivement pour valeurs $z \oplus 32361$ et $z \oplus -1 \oplus 23462 \oplus 32767$.

Enfin, le nœud interne de profondeur 2 parcouru est le nœud N122, les données $d_1$ et $d_2$ du couple ont respectivement pour valeurs $z \oplus 32767$ et $z \oplus -1 \oplus 23462 \oplus 32361$.

L'affectation des autres valeurs parcourues se fait ici par combinaison avec l'opération ou exclusive de la donnée $d_2$ du couple et de l'autre valeur parcourue à affecter.

Le processeur 4 retrouve alors la clé du nœud interne parcouru après le nœud parcouru de profondeur 1 en combinant par l'opération ou exclusif la donnée $d_1$ du couple et à la donnée d'initialisation z, c'est-à-dire comme suit : $z \oplus d_1$.

Le processeur 4 obtient alors le résultat booléen $b_2$ de la comparaison de la donnée d'entrée avec la clé du nœud parcouru de profondeur 2 tel que $b_2$ ait pour valeur 0 si la donnée d'entrée est inférieure ou égale à la clé du nœud parcouru de profondeur 2 et 1 si la donnée d'entrée est strictement supérieure à la clé du nœud parcouru de profondeur 2, la clé du nœud parcouru de profondeur 2 ayant pour valeur $z \oplus d_1$.

Le processeur 4 accumule alors l'incrément de la feuille parcourue en mettant à jour l'accumulateur h comme suit : $h = h \oplus b_2$.

Le processeur 4 détermine le résultat d'échantillonnage comme suit : $e = e + h$.

Selon un premier exemple, quand la valeur de la donnée d'entrée est 11112, le procédé initialise le résultat d'échantillonnage à -1 pendant l'étape d'initialisation du résultat d'échantillonnage, puis parcourt les nœuds internes N11, N112 et la feuille F3 pendant l'étape de recherche (étape E4).

Le procédé accumule les incréments des nœuds internes et de la feuille de l'arbre parcourus, c'est-à-dire 0, 2 et 0 et obtient donc 1 comme résultat d'échantillonnage.

Le procédé peut alors déterminer la donnée de sortie, pendant l'étape de détermination d'une donnée de sortie, comme ayant la valeur sb en sélectionnant l'échantillon de sortie d'indice 1 du troisième tableau.

Selon un deuxième exemple, quand la valeur de la donnée d'entrée est 32767, le procédé initialise le résultat d'échantillonnage à -1 pendant l'étape d'initialisation du résultat d'échantillonnage, puis parcourt les nœuds internes N12, N122 et la feuille F7 pendant l'étape de recherche (étape E4).

Le procédé accumule les incréments des nœuds internes et de la feuille de l'arbre parcourus, c'est-à-dire 4, 2 et 0 et obtient donc 5 comme résultat d'échantillonnage.

Le procédé peut alors déterminer la donnée de sortie, pendant l'étape de détermination d'une donnée de sortie, comme ayant la valeur sf en sélectionnant l'échantillon de sortie d'indice 5 du troisième tableau.

Selon un troisième exemple, quand la valeur de la donnée d'entrée est 0, le procédé initialise le résultat d'échantillonnage à -1 pendant l'étape d'initialisation du résultat d'échantillonnage, puis parcourt les nœuds internes N11, N111 et la feuille F2 pendant l'étape de recherche (étape E4).

Le procédé accumule les incréments des nœuds internes et de la feuille de l'arbre parcourus, c'est-à-dire 0, 0 et 1 et obtient donc 0 comme résultat d'échantillonnage.

Le procédé peut alors déterminer la donnée de sortie, pendant l'étape de détermination d'une donnée de sortie, comme ayant la valeur sa en sélectionnant l'échantillon de sortie d'indice 0 du troisième tableau.

L'invention peut être mise en œuvre pour des premier et deuxième tableaux d'autres tailles et utiliser un arbre parfait ayant une autre hauteur.

Selon un premier exemple, le premier tableau et le deuxième tableau peuvent avoir la même taille quand la taille du premier tableau, c'est-à-dire quand le premier tableau a un nombre, dénommé premier nombre, de premiers seuils de décision qui est une puissance de 2. Dans ce cas, le deuxième tableau peut être le premier tableau.

Selon un deuxième exemple, pour un échantillonnage gaussien d'un algorithme FroKEM-976, le premier tableau peut être de 12 premiers seuils de décisions et le deuxième tableau peut être de 16 deuxièmes seuils de décisions, le premier tableau et le deuxième tableau étant ainsi respectivement : [-1, 5638, 15915, 23689, 28571, 31116, 32217, 32613, 32731, 32760, 32766, 32767] et [-1, 5638, 15915, 23689, 28571, 31116, 32217, 32613, 32731, 32760, 32766, 32767, 32767, 32768, 32768, 32768]. Dans ce deuxième exemple, l'arbre binaire parfait de recherche a une hauteur de 4.

Quand le premier tableau a un premier nombre de premiers seuils de décision différent d'une puissance de 2, le deuxième tableau a un deuxième nombre de deuxièmes seuils de décision strictement supérieur au premier nombre.

Le deuxième tableau de deuxièmes seuils de décision permet l'utilisation d'un arbre binaire parfait bien que l'échantillonnage de la donnée d'entrée soit à partir d'un nombre de premiers seuils de décision, le premier nombre, différent d'une puissance de 2. Le deuxième nombre est une puissance de deux. Ainsi, chaque paire distincte de deuxièmes seuils de décision successifs du deuxième tableau définit un intervalle auxiliaire de décision d'une feuille de l'arbre binaire parfait.

Dans le premier exemple de mise en œuvre, chaque élément de décision du deuxième multiensemble a une multiplicité de 1, l'élément de décision 32767 du premier multiensemble a une multiplicité de 2, et chacun des autres éléments de décision du premier multiensemble a une multiplicité de 1. La donnée d'entrée appartient à un ensemble fini d'éléments d'entrée, les éléments d'entrée étant les entiers compris entre 0 et 32767.

Le deuxième multiensemble ne se distingue du premier multiensemble que par au moins une multiplicité d'un élément de décision, ici la multiplicité de 32767, chaque élément de décision de ladite au moins une multiplicité, ici 32767, ayant une valeur supérieure ou égale, à tous les éléments d'entrée dudit ensemble fini.

Le procédé est ainsi avantageux car il ne nécessite pas une correction du résultat d'échantillonnage, conditionnée à la valeur de la donnée d'entrée, bien que le deuxième tableau ait un deuxième nombre de deuxièmes seuils de décision strictement supérieur au premier nombre de premiers seuils de décision. En outre, l'étape de recherche (étape E4) peut comprendre pour chaque nœud interne parcouru, le chargement par dichotomie masquée de la clé du nœud interne parcouru concerné depuis au moins un emplacement mémoire du dispositif électronique.

De même, dans le deuxième exemple de mise en œuvre, chaque élément de décision du deuxième multiensemble a une multiplicité de 1, l'élément de décision -1 du premier multiensemble a une multiplicité de 2, et chacun des autres éléments de décision du premier multiensemble a une multiplicité de 1. La donnée d'entrée appartient à un ensemble fini d'éléments d'entrée, les éléments d'entrée étant les entiers compris entre 0 et 32767.

Le deuxième multiensemble ne se distingue du premier multiensemble que par au moins une multiplicité d'un élément de décision, ici la multiplicité de -1, chaque élément de décision de ladite au moins une multiplicité, ici -1, ayant une valeur strictement inférieure à tous les éléments d'entrée dudit ensemble fini.

Le procédé est alors là aussi avantageux car il ne nécessite pas une correction du résultat d'échantillonnage, conditionnée à la valeur de la donnée d'entrée, bien que le deuxième tableau ait un deuxième nombre de deuxièmes seuils de décision strictement supérieur au premier nombre de premiers seuils de décision. En outre, là aussi l'étape de recherche (étape E4) peut comprendre pour chaque nœud interne parcouru, le chargement par dichotomie masquée de la clé du nœud interne parcouru concerné depuis au moins un emplacement mémoire du dispositif électronique.

Comme évoqué plus haut, pour un échantillonnage gaussien d'un algorithme FrodoKEM-976, le premier tableau peut être de 12 premiers seuils de décisions et le deuxième tableau peut être de 16 deuxièmes seuils de décisions, le premier tableau et le deuxième tableau étant ainsi respectivement : [-1, 5638, 15915, 23689, 28571, 31116, 32217, 32613, 32731, 32760, 32766, 32767] et [-1, 5638, 15915, 23689, 28571, 31116, 32217, 32613, 32731, 32760, 32766, 32767, 32767, 32768, 32768, 32768].

Dans ce cas, chaque élément de décision du deuxième multiensemble a une multiplicité de 1, l'élément de décision 32767 du premier multiensemble a une multiplicité de 2, l'élément de décision 32768 du premier multiensemble a une multiplicité de 3 et chacun des autres éléments de décision du premier multiensemble a une multiplicité de 1. La donnée d'entrée appartient typiquement à un ensemble fini d'éléments d'entrée, les éléments d'entrée étant les entiers compris entre 0 et 32767. Le deuxième multiensemble ne se distingue alors du premier multiensemble que par au moins une multiplicité d'un élément de décision, ici la multiplicité de 32767 et la multiplicité de 32768, chaque élément de décision de ladite au moins une multiplicité, ici 32767 et 32768, ayant une valeur supérieure ou égale, à tous les éléments d'entrée dudit ensemble fini.

La description faite ci-dessus en référence aux figures annexées mentionne des intervalles de décision et des intervalles auxiliaires de décision qui sont ouverts à gauche et fermés à droite.

La description faite ci-dessus en référence aux figures annexées mentionne également que la recherche dans l'arbre binaire examine un nœud puis se poursuit dans le sous-arbre gauche si la donnée d'entrée est inférieure ou égale à la clé du nœud examiné, ou dans le sous-arbre droit si la donnée d'entrée est strictement supérieure à la clé du nœud examiné.

Le dispositif électronique et le procédé d'échantillonnage discret sécurisé décrits ci-dessus en référence aux figures annexées peuvent cependant être adaptés pour des intervalles de décision et des intervalles auxiliaires de décision qui sont ouverts à droite et fermés à gauche.

La recherche dans l'arbre binaire est alors modifiée pour examiner un nœud puis pour se poursuivre dans le sous-arbre gauche si la donnée d'entrée est strictement inférieure à la clé du nœud examiné, ou dans le sous-arbre droit si la donnée d'entrée est supérieure ou égale à la clé du nœud examinée. L'homme du métier comprendra que l'étape d'initialisation (étape E2) peut être omise, par exemple quand le résultat d'échantillonnage est initialisé à 0, tel qu'illustré ci-avant pour le premier exemple de mise en œuvre selon le premier mode d'implémentation.

De même, l'étape de détermination d'une donnée de sortie (étape E8) peut être omise, par exemple quand le procédé est mis en œuvre dans un algorithme cryptographique qui utilise directement le résultat d'échantillonnage.

L'homme du métier comprendra en outre que des étapes de ce procédé peuvent être mises en œuvre de façon concomitante, par exemple tel que décrit pour le premier et deuxième modes d'implémentations.

Le procédé et le dispositif électronique peuvent être adaptés pour une donnée d'entrée appartenant à un ensemble fini dont chaque élément d'entrée est négatif ou nul, ou à un ensemble fini d'éléments d'entrée comprenant au moins un élément d'entrée négatif et au moins un élément d'entrée positif. Par exemple, le dispositif électronique 2 peut stocker le signe de la donnée d'entrée, puis actualiser la donnée d'entrée avec la valeur absolue de ladite donnée d'entrée, typiquement en amont de la mise en œuvre du procédé décrit ci-avant. Le dispositif électronique 2 peut alors appliquer le signe stocké au résultat d'échantillonnage déterminé pendant l'étape de détermination (étape E6) d'un résultat d'échantillonnage.

Le procédé, respectivement le dispositif électronique, selon l'invention, est également particulièrement avantageux car il peut être facilement adapté pour une donnée d'entrée masquée.

Pour cela, des additions sécurisées, des comparaisons sécurisées et des opérations et sécurisées peuvent être utilisées avec les techniques habituelles de masquage et de manipulation de données masquées.

Des implémentations d'une addition sécurisée, d'une comparaison sécurisée et d'une opération et sécurisée sont connues de l'homme du métier. Le document « Pierre-Augustin Berthet, Justine Paillet and Cédric Tavernier; Masked Computation of the Floor Function and Its Application to the FALCON Signature, Cryptology ePrint Archive, Paper 2024/709, 2024 " décrit , notamment avec l'algorithme 10, une comparaison sécurisée pouvant être utilisée.

Le document « Gilles Barthe, Sonia Belaïd, Thomas Espitau, Pierre-Alain Fouque, Benjamin Gregoire, Melissa Rossi, and Mehdi Tibouchi; Masking the GLP Lattice-Based Signature Scheme at

Any Order, Cryptology ePrint Archive, Paper 2018/381, 2018 " décrit notamment avec l'algorithme 9, une opération d'addition sécurisée qui peut être utilisée par exemple quand le résultat d'échantillonnage est sous la forme de composantes d'un masquage booléen, avec l'algorithme 11, une opération et sécurisée, et avec l'algorithme 14, le rafraîchissement de masque sur une donnée, qui peuvent être utilisés.

Quand le résultat d'échantillonnage est sous la forme de composantes d'un masquage arithmétique, l'addition sécurisée consiste à faire des additions non sécurisées, chaque addition non sécurisée portant sur une composante distincte des données masquées.

**Revendications**

1. Procédé d'échantillonnage discret sécurisé à partir d'une donnée d'entrée et d'un premier tableau de premiers seuils de décision ordonnés, le procédé étant mis en œuvre par un dispositif électronique (2), et le procédé étant **caractérisé en ce qu'**il comprend les étapes suivantes :

   a) Recherche (E4) d'un intervalle auxiliaire de décision comprenant la donnée d'entrée, en parcourant un arbre binaire parfait de recherche depuis un nœud racine jusqu'à une feuille, l'arbre comprenant le nœud racine, une pluralité de nœuds internes et une pluralité de feuilles,

   - chaque nœud ayant une clé égale à un deuxième seuil de décision distinct d'un deuxième tableau de deuxièmes seuils de décision ordonnés, les deuxièmes seuils de décision du deuxième tableau définissant un premier multiensemble d'éléments de décision incluant un deuxième multiensemble d'éléments de décision défini par les premiers seuils de décision du premier tableau,
   - chaque feuille étant un intervalle auxiliaire de décision semi-ouvert défini par une paire distincte de deuxièmes seuils de décision successifs du deuxième tableau,
   - chaque nœud interne d'une même profondeur ayant un incrément parmi un même ensemble de deux valeurs différentes associé à la profondeur concernée, des nœuds internes rattachés à un même autre nœud ayant des incréments de valeur différente, et
   - chaque feuille de l'arbre ayant un incrément parmi un même autre ensemble de deux valeurs différentes tel que des feuilles rattachées à un même nœud ont des incréments de valeur différente, et

   b) détermination (E6) d'un résultat d'échantillonnage par accumulation des incréments des nœuds internes et de la feuille de l'arbre parcourus pendant la recherche.

2. Procédé d'échantillonnage discret sécurisé selon la revendication précédente dans lequel

   - le premier tableau a un premier nombre de premiers seuils de décision différent d'une puissance de 2, et
   - le deuxième tableau a un deuxième nombre de deuxièmes seuils de décision strictement supérieur au premier nombre.

3. Procédé d'échantillonnage discret sécurisé selon la revendication précédente dans lequel :

   - la donnée d'entrée appartient à un ensemble fini d'éléments d'entrée, et
   - Le deuxième multiensemble ne se distingue du premier multiensemble que par au moins une multiplicité d'un élément de décision, chaque élément de décision de ladite au moins une multiplicité, ayant une valeur supérieure ou égale, ou strictement inférieure, à tous les éléments d'entrée dudit ensemble fini.

4. Procédé d'échantillonnage discret sécurisé selon l'une quelconque des revendications précédentes, dans lequel :

   - pour chaque nœud parcouru, un résultat booléen est déterminé par comparaison de la donnée d'entrée avec la clé du nœud parcouru concerné, et
   - l'accumulation des incréments est par des opérations bit à bit à partir desdits résultats booléen.

5. Procédé d'échantillonnage discret sécurisé selon l'une quelconque des revendications précédentes, dans lequel pour chaque nœud interne parcouru, la clé du nœud interne parcouru concerné est déterminée par des opérations bit à bit à partir d'un résultat booléen de la comparaison de la donnée d'entrée avec la clé d'un autre nœud.

6. Procédé d'échantillonnage discret sécurisé selon l'une quelconque des revendications 1 à 4, dans lequel :

- Une pluralité de clés de l'arbre est stockée de manière ordonnée dans au moins un emplacement mémoire du dispositif électronique, et
- pour chaque nœud interne parcouru, la clé du nœud interne parcouru concerné est chargée par dichotomie masquée depuis ledit au moins un emplacement mémoire du dispositif électronique.

7. Procédé d'échantillonnage discret sécurisé selon l'une quelconque des revendications précédentes comprenant en outre une étape (E8) de détermination d'une donnée de sortie par sélection à partir du résultat d'échantillonnage, d'un échantillon de sortie dans un troisième tableau d'échantillons de sortie.

8. Procédé d'échantillonnage discret sécurisé selon l'une quelconque des revendications précédentes, le procédé étant mis en œuvre dans un algorithme cryptographique.

9. Procédé d'échantillonnage discret sécurisé selon la revendication précédente, dans lequel l'algorithme cryptographique est un algorithme parmi l'algorithme Hawk, l'algorithme FrodoKEM, l'algorithme Falcon et l'algorithme qTesla.

10. Programme d'ordinateur comprenant des instructions exécutables par un processeur et adaptées à mettre en œuvre un procédé selon l'une quelconque des revendications précédentes, lorsque ces instructions sont exécutées par le processeur.

11. Dispositif électronique (2) apte à mettre en œuvre un échantillonnage discret sécurisé à partir d'une donnée d'entrée et d'un premier tableau de premiers seuils de décision ordonnés, le dispositif électronique comprenant :

- un bloc de recherche configuré pour rechercher un intervalle auxiliaire de décision comprenant la donnée d'entrée, en parcourant un arbre binaire parfait de recherche depuis un nœud racine jusqu'à une feuille, l'arbre comprenant le nœud racine, une pluralité de nœuds internes et une pluralité de feuilles, chaque nœud ayant une clé égale à un deuxième seuil de décision distinct d'un deuxième tableau de deuxièmes seuils de décision ordonnés, les deuxièmes seuils de décision du deuxième tableau définissant un premier multiensemble d'éléments de décision incluant un deuxième multiensemble d'éléments de décision défini par les premiers seuils de décision du premier tableau, chaque feuille étant un intervalle auxiliaire de décision semi-ouvert défini par une paire distincte de deuxièmes seuils successifs du deuxième tableau, chaque nœud interne d'une même profondeur ayant un incrément parmi un même ensemble de deux valeurs différentes associé à la profondeur concernée, des nœuds internes rattachés à un même autre nœud ayant des incréments de valeur différente, et chaque feuille de l'arbre ayant un incrément parmi un même autre ensemble de deux valeurs différentes tel que des feuilles rattachées à une même nœud ont des incréments de valeur différente, et
- un bloc de détermination d'un résultat d'échantillonnage, configuré pour déterminer un résultat d'échantillonnage par accumulation des incréments des nœuds internes et de la feuille de l'arbre parcourus pendant la recherche.

L

10 ———— 4

6          8

2

Figure 1

| E2 |
| --- |

| E4 |
| --- |

| E6 |
| --- |

| E8 |
| --- |

Figure 2

Figure 3

**EP 4 718 769 A1**

Europäisches Patentamt
European Patent Office
Office européen des brevets

## RAPPORT DE RECHERCHE EUROPEENNE

Numéro de la demande

EP 25 18 3565

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | ZHANG CONG ET AL: "A Flexible and Generic Gaussian Sampler With Power Side-Channel Countermeasures for Quantum-Secure Internet of Things", IEEE INTERNET OF THINGS JOURNAL, IEEE, USA, vol. 7, no. 9, 16 mars 2020 (2020-03-16), pages 8167-8177, XP011809183, DOI: 10.1109/JIOT.2020.2981133 * Algorithm 2 * ----- | 1-11 | INV. H04L9/08 G06F7/58 H04L9/30 |
| A | SUJOY SINHA ROY ET AL: "Compact and Side Channel Secure Discrete Gaussian Sampling", IACR, INTERNATIONAL ASSOCIATION FOR CRYPTOLOGIC RESEARCH, vol. 20141001:063822, 1 octobre 2014 (2014-10-01), pages 1-10, XP061017030, * sections II-C, III * ----- | 1-11 | |
| A | CROLS JONAS ET AL: "TreeGRNG: Binary Tree Gaussian Random Number Generator for Efficient Probabilistic AI Hardware", 2024 DESIGN, AUTOMATION & TEST IN EUROPE CONFERENCE & EXHIBITION (DATE), EDAA, 25 mars 2024 (2024-03-25), pages 1-6, XP034615830, * section III * ----- | 1-11 | **DOMAINES TECHNIQUES RECHERCHES (IPC)** H04L G06F |

Le présent rapport a été établi pour toutes les revendications

| Lieu de la recherche | Date d'achèvement de la recherche | Examinateur |
|---|---|---|
| Munich | 26 juin 2025 | Yamajako-Anzala, A |

EPO FORM 1503 03.82 (P04C02)

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **FRANÇOIS GÉRARD** ; **MÉLISSA ROSSI.** An Efficient and Provable Masked Implementation of qTESLA. *Cryptology ePrint Archive*, 2019
- **PIERRE-AUGUSTIN BERTHET** ; **JUSTINE PAILLET** ; **CÉDRIC TAVERNIER**. Masked Computation of the Floor Function and Its Application to the FALCON Signature. *Cryptology ePrint Archive*, 2024
- **GILLES BARTHE, SONIA BELAÏD, THOMAS ESPITAU, PIERRE-ALAIN FOUQUE, BENJAMIN GRE- GOIRE, MELISSA ROSSI, AND MEHDI TIBOUCHI**. Masking the GLP Lattice-Based Signature Scheme at Any Order. *Cryptology ePrint Archive*, 2018